# EUROPEAN PATENT APPLICATION

(11) **EP 4 621 257 A1**
(43) Date of publication of application: **24.09.2025**
(21) Application number: 25164698.0
(22) Date of filing: 19.03.2025
(51) Int. Cl.: F16D 55/226, F16D 65/18

(54) **ELECTRO-MECHANICAL BRAKE APPARATUS IN WHICH LEAD SCREW EMBEDS OR IS EMBEDDED IN OUTPUT SHAFT, AND VEHICLE**

(30) Priority: 20.03.2024 CN 202410320023
(71) Applicant: Huawei Digital Power Technologies Co., Ltd., Shenzhen, Guangdong 518043 (CN)
(72) Inventor: LUO, Yuehao, Shenzhen, Guangdong, 518043 (CN); HE, Yuhui, Shenzhen, Guangdong, 518043 (CN)
(74) Representative: Maiwald GmbH

(57) **Abstract**

This application provides an electro-mechanical brake apparatus (100) in which a lead screw (21) embeds or is embedded in an output shaft (31), and a vehicle. The electro-mechanical brake apparatus (100) includes a brake caliper (10), a ball lead screw (20), and a speed reducer (30). The ball lead screw includes the lead screw (21) and a screw nut (22), the speed reducer (30) includes the output shaft (31), one end of the output shaft (31) is configured to drive the lead screw to rotate, the screw nut is configured to move with rotation of the lead screw in an axial direction of the lead screw, and the brake caliper (10) is configured to: fasten the speed reducer (30) and accommodate the lead screw (21) and the screw nut (22). An end face of the lead screw (21) faces the speed reducer (30) in the axial direction of the lead screw, and the end face includes: an axial groove, where the one end of the output shaft is configured to be embedded in the axial groove in the axial direction of the lead screw, and the axial groove is configured to be in transmission connection to the one end of the output shaft (31); or an axial protrusion, where the axial protrusion is configured to be embedded in or nest the one end of the output shaft (31) in the axial direction of the lead screw (21), and the axial protrusion is configured to be in transmission connection to the one end of the output shaft (31).

## Description

### TECHNICAL FIELD

This application relates to the field of vehicle technologies, and in particular, to an electro-mechanical brake apparatus in which a lead screw embeds or is embedded in an output shaft, and a vehicle.

### BACKGROUND

An electro-mechanical brake (electro-mechanical brake, EMB) apparatus drives a brake to brake through cooperation between a motor and a mechanical feed mechanism. The electro-mechanical brake apparatus is characterized by a simple structure, sensitive response, stable load transfer, no hydraulic pipe, and the like, and has high transfer efficiency. In addition, the electro-mechanical brake apparatus also has a development trend of miniaturization, to adapt to wheel space of a vehicle.

### SUMMARY

This application provides an electro-mechanical brake apparatus in which a lead screw embeds or is embedded in an output shaft, and a vehicle, where the output shaft is embedded in or nests the lead screw to reduce an axial size of the electro-mechanical brake apparatus. This application specifically includes the following solutions.

According to a first aspect, this application provides an electro-mechanical brake apparatus in which a lead screw embeds or is embedded in an output shaft. The electro-mechanical brake apparatus includes a brake caliper, a ball lead screw, and a speed reducer, where the ball lead screw includes the lead screw and a screw nut, the speed reducer includes the output shaft, one end of the output shaft is configured to drive the lead screw to rotate, the screw nut is configured to move with rotation of the lead screw in an axial direction of the lead screw, the brake caliper is configured to: fasten the speed reducer and accommodate the lead screw and the screw nut, an end face of the lead screw faces the speed reducer in the axial direction of the lead screw, and the end face includes:
an axial groove, where the one end of the output shaft is configured to be embedded in the axial groove in the axial direction of the lead screw, and the axial groove is configured to be in transmission connection to the one end of the output shaft; or
an axial protrusion, where the axial protrusion is configured to be embedded in or nest the one end of the output shaft in the axial direction of the lead screw, and the axial protrusion is configured to be in transmission connection to the one end of the output shaft.

According to the electro-mechanical brake apparatus in this application, the brake caliper is configured to: fasten the speed reducer and accommodate the ball lead screw, so that the speed reducer can drive the lead screw to rotate through the output shaft, and the lead screw drives the screw nut to move in the axial direction of the lead screw and pushes one or more friction plates to implement braking.

The end face that is of the lead screw and that faces the speed reducer includes the axial groove or the axial protrusion. The one end of the output shaft is embedded in the axial groove or the axial protrusion, or the one end of the output shaft nests the axial protrusion, to implement transmission connection between the output shaft and the lead screw. According to the electro-mechanical brake apparatus in this application, the output shaft embeds or is embedded in the lead screw, so that an axial length of the electro-mechanical brake apparatus is reduced, miniaturization of the electro-mechanical brake apparatus is facilitated, and adaptation to wheel space is facilitated.

In an implementation, a thread of an inner circumferential surface of the screw nut is engaged with a thread of an outer circumferential surface of the lead screw, the brake caliper includes an accommodating cavity, and the accommodating cavity is configured to the screw nut, the lead screw, and at least one of a pressure sensor or a thrust bearing.

In the axial direction of the lead screw, at least one of the pressure sensor or the thrust bearing is arranged between the end face and a cavity wall of the accommodating cavity.

In this implementation, the screw nut is sleeved outside the lead screw and is in engaged transmission with the lead screw. An outer circumferential surface of the screw nut is configured to abut against an inner circumferential surface of the accommodating cavity. At least one of the pressure sensor or thrust bearing is further accommodated between the cavity wall of the accommodating cavity and the end face of the lead screw.

The pressure sensor is configured to detect an axial thrust force applied to the lead screw in a working process of the electro-mechanical brake apparatus, so as to adjust a brake force output by a brake motor. The thrust bearing is configured to bear the axial thrust force applied to the lead screw in the working process of the electro-mechanical brake apparatus, so as to ensure stable rotation of the lead screw driven by the output shaft.

In an implementation, the one end of the output shaft penetrates the cavity wall of the accommodating cavity to extend into the accommodating cavity to embed or be embedded in the lead screw.

In this implementation, because the output shaft embeds or is embedded in the lead screw in the brake caliper, a transmission structure between the output shaft and the speed reducer can be simplified, to reduce an axial size of the speed reducer.

In an implementation, in the axial direction of the lead screw, a length of the one end that is of the output shaft and that embeds or is embedded in the lead screw is greater than a length of the other end of the output shaft.

In an implementation, the end face includes the axial protrusion, where
in the axial direction of the lead screw, a length of the lead screw is greater than a length of the screw nut;
in a radial direction of the lead screw, a diameter of the axial protrusion is less than an inner diameter of the screw nut; and
in a direction that is in the axial direction of the lead screw and that faces the speed reducer, the thrust bearing and the pressure sensor are sequentially sleeved on the axial protrusion.

In this implementation, the length of the lead screw is greater than the length of the screw nut, so that screw nut is always engaged with the lead screw in a sliding process in the axial direction of the lead screw. The diameter of the axial protrusion is less than the inner diameter of the screw nut, and a size of a structure in which the axial protrusion embeds or is embedded in the one end of the output shaft can be controlled. The thrust bearing is abutted between the end face of the lead screw and the pressure sensor, ensuring that the pressure sensor is static relative to the brake caliper and that the lead screw rotates stably.

In an implementation, in the radial direction of the lead screw:
the diameter of the axial protrusion is greater than a diameter of the output shaft, and an inner hole of the thrust bearing and an inner hole of the pressure sensor are separately configured to abut against an outer circumferential surface of the axial protrusion.

In this implementation, the axial protrusion is configured to nest the one end of the output shaft, and the outer circumferential surface of the axial protrusion is configured to abut against the inner hole of the thrust bearing and the inner hole of the pressure sensor, so as to separately implement radial positioning of the thrust bearing and the pressure sensor.

In an implementation, in the radial direction of the lead screw:
a diameter of the output shaft is greater than the diameter of the axial protrusion, and an inner hole of the thrust bearing and an inner hole of the pressure sensor are separately configured to abut against an outer circumferential surface of the output shaft.

In this implementation, the axial protrusion is configured to be embedded in the one end of the output shaft, and the outer circumferential surface of the one end of the output shaft is configured to abut against the inner hole of the thrust bearing and the inner hole of the pressure sensor, so as to separately implement radial positioning of the thrust bearing and the pressure sensor.

In an implementation, the end face includes an axial groove, where
in the axial direction of the lead screw, a length of the lead screw is greater than a length of the screw nut;
in a radial direction of the lead screw, a diameter of the axial groove is less than an inner diameter of the screw nut;
in a direction that is in the axial direction of the lead screw and that faces the speed reducer, the thrust bearing and the pressure sensor are sequentially sleeved on the output shaft; and
an inner hole of the thrust bearing and an inner hole of the pressure sensor are separately configured to abut against an outer circumferential surface of the output shaft.

In this implementation, the diameter of the axial groove is less than the inner diameter of the screw nut, and a size of a structure in which the one end of the output shaft embeds or is embedded in the axial groove may be controlled. On a side of the end face facing the speed reducer, because the axial protrusion structure is omitted, the outer circumferential surface of the output shaft abuts against the inner hole of the thrust bearing and the inner hole of the pressure sensor. On the premise of implementing radial positioning of the thrust bearing and the pressure sensor, radial sizes of the thrust bearing and the pressure sensor are reduced.

In an implementation, in the axial direction of the lead screw, the accommodating cavity includes a first segment and a second segment that are connected to each other, an inner circumferential surface of the first segment is configured to abut against an outer circumferential surface of the screw nut, and an inner circumferential surface of the second segment is configured to abut against an outer circumferential surface of the pressure sensor, where
in the radial direction of the lead screw, a diameter of the inner circumferential surface of the first segment is less than a diameter of the inner circumferential surface of the second segment and is greater than the inner diameter of the screw nut; and
in the axial direction of the lead screw, a length of the second segment is less than or equal to a sum of a length of the thrust bearing and a length of the pressure sensor.

In this implementation, the first segment of the accommodating cavity is configured to support the screw nut, and a step surface formed between the first segment and the second segment that are of the accommodating cavity is configured to abut against the screw nut to limit an axial displacement of the screw nut. The annular step surface can also avoid interference with the lead screw in rotation. The second segment of the accommodating cavity is configured to accommodate the thrust bearing and the pressure sensor.

In an implementation, in the axial direction of the lead screw, the accommodating cavity includes a third segment, and the third segment is connected to the first segment through the second segment, where
in the radial direction of the lead screw, a diameter of an inner circumferential surface of the third segment is less than the diameter of the inner circumferential surface of the second segment and is greater than a diameter of the one end of the output shaft; and
in the axial direction of the lead screw, an end face that is of the third segment and that faces the lead screw is configured to abut against an outer surface of the pressure sensor.

In this implementation, another step surface formed between the second segment and the third segment that are of the accommodating cavity is configured to abut against the outer surface of the pressure sensor, and the another step surface is configured to: limit axial displacement of the pressure sensor and bear an axial thrust force transferred from the lead screw to the pressure sensor.

In an implementation, in the axial direction of the lead screw, the thrust bearing includes two opposite side faces, where one of the side faces is attached to the end face of the lead screw, and the other of the side faces is attached to another outer surface of the pressure sensor, where
an outer diameter of the one side face is less than or equal to an outer diameter of the end face; and
an outer diameter of the other side face is less than or equal to an outer diameter of the another outer surface.

In this implementation, the two side faces of the thrust bearing are respectively attached to the end face of the lead screw and the another outer surface of the pressure sensor completely, so that a force-bearing status of the pressure sensor can be improved, and the pressure sensor is ensured to work reliably.

In an implementation, the one end of the output shaft penetrates the cavity wall of accommodating cavity in the axial direction of the lead screw, and is located in the accommodating cavity, where
an outer circumferential surface of the one end of the output shaft includes at least one radial groove, and the at least one radial groove is configured to be embedded in the axial groove or the axial protrusion.

In this implementation, the one end of the output shaft is configured to be embedded in the axial groove or axial protrusion. At least one radial groove is provided on the outer circumferential surface of the one end of the output shaft to control a diameter of the outer circumferential surface of the one end of the output shaft, so that the size of the structure in which the lead screw embeds or is embedded in the one end of the output shaft is controlled.

In an implementation, an inner circumferential surface of the one end of the output shaft includes at least one radial protrusion, and the at least one radial protrusion is configured to nest the axial protrusion.

In this implementation, the axial protrusion is configured to be embedded in the one end of the output shaft. At least one radial protrusion is disposed on the inner circumferential surface of the one end of the output shaft to control a diameter of the outer circumferential surface of the axial protrusion, so that the size of the structure in which the lead screw embeds or is embedded in one end of the output shaft is controlled.

In an implementation, the ball lead screw includes a piston, and the piston is partially accommodated in the accommodating cavity, where
in the direction that is in the axial direction of the lead screw and that faces the speed reducer, the piston and the screw nut are sequentially arranged;
the piston includes a groove, where a groove opening of the groove faces the speed reducer in the axial direction of the lead screw, and the groove is configured to partially accommodate the lead screw; and
in the axial direction of the lead screw, a sum of a groove depth of the groove and the length of the screw nut is greater than or equal to the length of the lead screw.

In this implementation, the piston is configured to abut against the screw nut in the axial direction of the lead screw to transfer a brake force. A groove bottom of the groove of the piston may extend out of the accommodating cavity, and abuts against a friction plate, to drive the friction plate to move toward a brake disc of a wheel to implement braking. A groove bottom area of the groove of the piston is large, so that reliable transmission of the brake force can be achieved.

In an implementation, the speed reducer includes a planetary gear set, the other end of the output shaft includes at least one shaft hole, the at least one shaft hole is configured to fasten at least one transmission shaft, and the at least one transmission shaft is configured to be in transmission connection to at least one planetary gear of the one planetary gear set, where
in the axial direction of the lead screw, the planetary gear set is arranged on a side that is of the output shaft and that is away from the lead screw; and
in the radial direction of the lead screw, a diameter of the other end of the output shaft is greater than the diameter of the one end, and an axis of each of the at least one shaft hole is offset from an axis of the lead screw.

In this implementation, the other end of the output shaft is configured to be in transmission connection to the planetary gear set of the speed reducer. The other end of the output shaft is configured to be in transmission connection to at least one planetary gear of the planetary gear set, so that a structure of a planet carrier in the planetary gear set is omitted. The output shaft may directly output the brake force through the at least one planetary gear, to reduce an axial size of the speed reducer.

In an implementation, the planetary gear set includes a sun gear, and the sun gear is configured to be in transmission connection to the at least one planetary gear, where
in the axial direction of the lead screw, the sun gear is disposed on the side that is of the output shaft and that is away from the lead screw;
the other end of the output shaft includes a bearing accommodating groove, and a groove opening of the bearing accommodating groove is away from the lead screw in the axial direction of the lead screw; and
the bearing accommodating groove is configured to fasten an outer ring of a bearing, and an inner ring of the bearing is configured to fasten a transmission shaft of the sun gear.

In this implementation, because the shaft hole at the other end of the output shaft is offset from the axis of the lead screw, space at the other end of the output shaft in the axial direction of the lead screw may be used to fasten the outer ring of the bearing, and the transmission shaft of the sun gear in the planetary gear set is fastened through the inner ring of the bearing. The output shaft and the planetary gear set are compact in structure, so that the axial size of the speed reducer is reduced.

In an implementation, in the axial direction of the lead screw, the brake caliper and a housing of the speed reducer include two side walls that are fixedly attached, each of the side walls includes one avoidance hole, and the two avoidance holes are both configured to allow the output shaft to pass through, where
in the radial direction of the lead screw, a diameter of one avoidance hole is greater than a diameter of the other avoidance hole; and
an inner circumferential surface of the one avoidance hole is configured to fasten an outer ring of another bearing, and an inner ring of the another bearing is configured to fasten a middle segment of the output shaft.

In this implementation, the outer ring of the another bearing is fastened through the avoidance hole of the brake caliper or the avoidance hole of the housing of the speed reducer, and the inner ring of the another bearing is configured to support the middle segment of the output shaft, so that a reliable support structure can be formed for the output shaft, and the output shaft is ensured to drive the lead screw to rotate stably.

In an implementation, the electro-mechanical brake apparatus includes a brake motor, and the speed reducer is configured to be in transmission connection to the brake motor and the ball lead screw, where
in the axial direction of the lead screw, the brake motor and the brake caliper are arranged on a same side of the speed reducer; and
the brake caliper includes an accommodating groove, the accommodating groove is spaced away from the ball lead screw in the radial direction of the lead screw, and the accommodating groove is configured to partially accommodate the brake motor.

In this implementation, the brake motor and the brake caliper are arranged on a same side of the speed reducer, so that an axial size of the electro-mechanical brake apparatus in this application can be shortened. The brake motor is partially accommodated in the accommodating groove of the brake caliper, so that an axial size of the motor is further reduced.

In an implementation, the speed reducer includes a parallel shaft gear set, and the parallel shaft gear set includes an input shaft and another output shaft. The input shaft and the another output shaft are spaced from each other in the axial direction of the lead screw. The input shaft is configured to be in transmission connection to a motor shaft of the brake motor, and the another output shaft is configured to be in transmission connection to another input shaft of the planetary gear set.

According to a second aspect, this application provides a vehicle, including a wheel and the electro-mechanical brake apparatus provided in any one of the foregoing implementations, where
the axis of the lead screw of the electro-mechanical brake apparatus is parallel to an axis of the wheel;
in an axial direction of the wheel, the brake caliper of the electro-mechanical brake apparatus is closer to the wheel than the speed reducer; and
the screw nut of the electro-mechanical brake apparatus is configured to drive one or more friction plates to slide in the axial direction of the wheel, to brake a brake disc of the wheel.

Because the axial size of the electro-mechanical brake apparatus provided in the first aspect of this application is short, the vehicle provided in the second aspect of this application is also convenient for arrangement of wheel space, and larger internal space or a more compact structure is obtained.

### BRIEF DESCRIPTION OF DRAWINGS

To describe technical solutions in this application more clearly, the following briefly describes accompanying drawings for describing implementations. Clearly, the accompanying drawings in the following descriptions are merely some implementations of this application, and a person of ordinary skill in the art may still derive other drawings from these accompanying drawings without creative efforts.
FIG. 1 is a diagram of an appearance structure of a wheel of a vehicle according to an embodiment of this application;
FIG. 2 is a diagram of a cross-sectional structure of a wheel of a vehicle according to an embodiment of this application;
FIG. 3 is a diagram of an outline structure of an electro-mechanical brake apparatus according to an embodiment of this application;
FIG. 4 is a diagram of an exploded structure of an electro-mechanical brake apparatus according to an embodiment of this application;
FIG. 5 is a diagram of a cross-sectional structure of an electro-mechanical brake apparatus according to an embodiment of this application;
FIG. 6 is a diagram of a cross-sectional structure of an electro-mechanical brake apparatus according to an embodiment of this application;
FIG. 7 is a diagram of an outline structure of some internal components of an electro-mechanical brake apparatus according to an embodiment of this application;
FIG. 8 is a diagram of an outline structure of some internal components of an electro-mechanical brake apparatus according to an embodiment of this application;
FIG. 9 is a diagram of a partial cross-sectional structure of some internal components of an electro-mechanical brake apparatus according to an embodiment of this application;
FIG. 10 is a diagram of an outline structure of some internal components of an electro-mechanical brake apparatus according to an embodiment of this application;
FIG. 11 is a diagram of an outline structure of some internal components of an electro-mechanical brake apparatus according to an embodiment of this application;
FIG. 12 is a diagram of a partial cross-sectional structure of some internal components of an electro-mechanical brake apparatus according to an embodiment of this application;
FIG. 13 is a diagram of an outline structure of some internal components of an electro-mechanical brake apparatus according to an embodiment of this application;
FIG. 14 is a diagram of an outline structure of some internal components of an electro-mechanical brake apparatus according to an embodiment of this application;
FIG. 15 is a diagram of a partial cross-sectional structure of some internal components of an electro-mechanical brake apparatus according to an embodiment of this application;
FIG. 16 is a diagram of a partial cross-sectional structure of some internal components of an electro-mechanical brake apparatus according to an embodiment of this application;
FIG. 17 is a diagram of a partially enlarged structure of a brake caliper of an electro-mechanical brake apparatus according to an embodiment of this application;
FIG. 18 is a diagram of a partially enlarged structure of some internal components of an electro-mechanical brake apparatus according to an embodiment of this application;
FIG. 19 is a diagram of an outline structure of an output shaft of a speed reducer of an electro-mechanical brake apparatus according to an embodiment of this application;
FIG. 20 is a diagram of a partial structure of a ball lead screw of an electro-mechanical brake apparatus according to an embodiment of this application;
FIG. 21 is a diagram of an outline structure of an output shaft of a speed reducer of an electro-mechanical brake apparatus according to an embodiment of this application;
FIG. 22 is a diagram of a partial structure of a ball lead screw of an electro-mechanical brake apparatus according to an embodiment of this application;
FIG. 23 is a diagram of an outline structure of an output shaft of a speed reducer of an electro-mechanical brake apparatus according to an embodiment of this application;
FIG. 24 is a diagram of a partial structure of a ball lead screw of an electro-mechanical brake apparatus according to an embodiment of this application;
FIG. 25 is a diagram of a partially enlarged structure of some internal components of an electro-mechanical brake apparatus according to an embodiment of this application;
FIG. 26 is a diagram of an outline structure of a piston of a ball lead screw of an electro-mechanical brake apparatus according to an embodiment of this application;
FIG. 27 is a diagram of a structure of an internal component of a speed reducer of an electro-mechanical brake apparatus according to an embodiment of this application;
FIG. 28 is a diagram of an exploded structure of some internal components of a speed reducer of an electro-mechanical brake apparatus according to an embodiment of this application;
FIG. 29 is a diagram of a partially enlarged structure of some internal components of an electro-mechanical brake apparatus according to an embodiment of this application;
FIG. 30 is a diagram of a partially enlarged structure of some internal components of an electro-mechanical brake apparatus according to an embodiment of this application; and
FIG. 31 is a diagram of a transmission structure between a speed reducer and a brake motor that are of an electro-mechanical brake apparatus according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In this specification, terms such as "first" and "second" are sequence numbers of components, are merely intended to distinguish between the described objects, and do not have any sequential or technical meaning. Unless otherwise specified, the "connection" in this application includes a direct connection and an indirect connection. In descriptions of this application, it should be understood that orientation or position relationships indicated by the terms "above", "below", "front", "back", "top", "bottom", "inside", "outside", and the like are based on orientation or position relationships shown in the accompanying drawings, and are merely intended for ease of describing this application and simplifying descriptions, rather than indicating or implying that a described apparatus or element needs to have a specific orientation or needs to be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely mean that a horizontal height of the first feature is greater than that of the second feature. That the first feature is "below" or "under" the second feature may be that the first feature is right below or obliquely below the second feature, or merely mean that a horizontal height of the first feature is less than that of the second feature.

This application provides an electro-mechanical brake apparatus in which a lead screw embeds or is embedded in an output shaft. The electro-mechanical brake apparatus includes a brake caliper, a ball lead screw, and a speed reducer, where the ball lead screw includes the lead screw and a screw nut, the speed reducer includes the output shaft, one end of the output shaft is configured to drive the lead screw to rotate, the screw nut is configured to move with rotation of the lead screw in an axial direction of the lead screw, the brake caliper is configured to: fasten the speed reducer and accommodate the lead screw and the screw nut, an end face of the lead screw faces the speed reducer in the axial direction of the lead screw, and the end face includes:
an axial groove, where the one end of the output shaft is configured to be embedded in the axial groove in the axial direction of the lead screw, and the axial groove is configured to be in transmission connection to the one end of the output shaft; or
an axial protrusion, where the axial protrusion is configured to be embedded in or nest the one end of the output shaft in the axial direction of the lead screw, and the axial protrusion is configured to be in transmission connection to the one end of the output shaft.

According to the electro-mechanical brake apparatus in this application, the output shaft embeds or is embedded in the lead screw, so that an axial length of the electro-mechanical brake apparatus is reduced, miniaturization of the electro-mechanical brake apparatus is facilitated, and adaptation to wheel space is facilitated.

This application provides a vehicle, including a wheel and the foregoing electro-mechanical brake apparatus, where
an axis of the lead screw of the electro-mechanical brake apparatus is parallel to an axis of the wheel;
in an axial direction of the wheel, the brake caliper of the electro-mechanical brake apparatus is closer to the wheel than the speed reducer; and
the screw nut of the electro-mechanical brake apparatus is configured to drive one or more friction plates to slide in the axial direction of the wheel, to brake a brake disc of the wheel.

In this application, the vehicle facilitates arrangement of wheel space, and larger internal space or a more compact structure is obtained.

In this application, the vehicle includes a wheel and a frame, and the wheel is rotatably connected to the frame to drive the vehicle to travel. In this application, the electro-mechanical brake apparatus is fastened on the frame and is located at the wheel, and the electro-mechanical brake apparatus brakes the wheel through action of an internal structure.

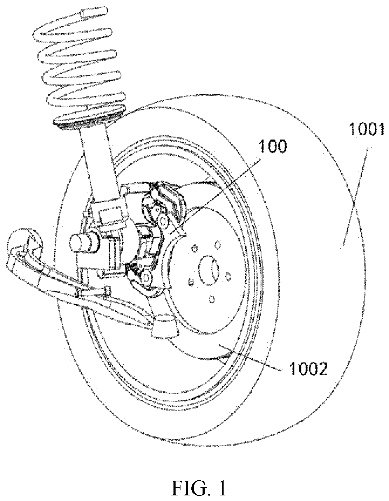

FIG. 1 is a diagram of an appearance structure of a wheel of a vehicle according to an embodiment of this application.

As shown in FIG. 1, a brake disc 1002 is disposed on a wheel 1001, and the brake disc 1002 is coaxially fastened with a wheel hub of the wheel 1001. The wheel 1001 rotates relative to the frame, and the brake disc 1002 synchronously rotates with the wheel 1001 relative to the frame. As shown in FIG. 1, an outer diameter size of the brake disc 1002 is less than an inner diameter size of an inner rim of the wheel 1001, and the brake disc 1002 is accommodated in the inner rim of the wheel 1001.

In this application, an electro-mechanical brake apparatus 100 in which a lead screw embeds or is embedded in an output shaft is fastened to the frame. The electro-mechanical brake apparatus 100 at least partially extends into the inner rim of the wheel 1001, and cooperates with the brake disc 1002 to implement braking on the wheel 1001.

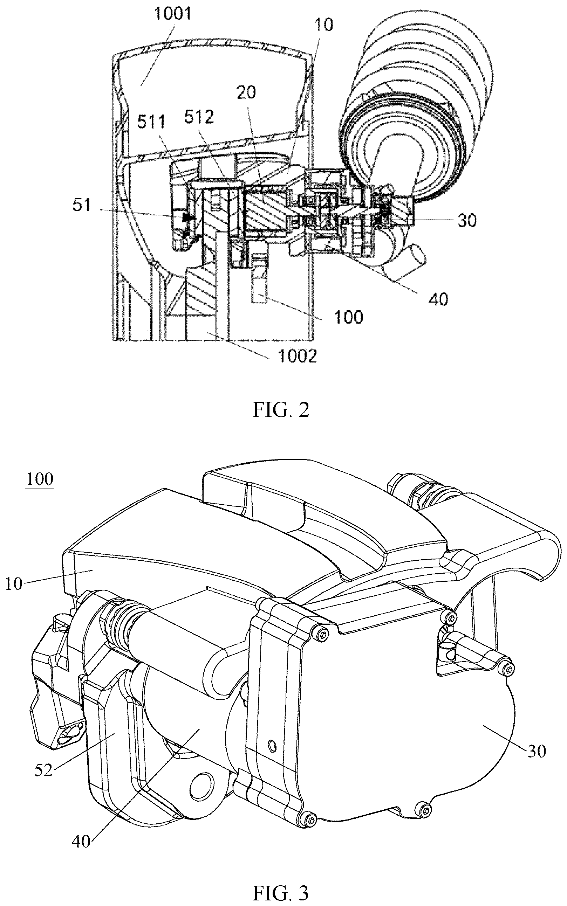

Specifically, refer to FIG. 2. FIG. 2 is a diagram of a cross-sectional structure of a wheel of a vehicle according to this application.

As shown in FIG. 2, the electro-mechanical brake apparatus 100 in this application includes a brake caliper 10, a ball lead screw 20, a speed reducer 30, and a brake motor 40. An axis of the ball lead screw 20 is parallel to an axis of the wheel 1001, and in an axial direction of the ball lead screw 20, the brake caliper 10 is closer to the wheel 1001 than the speed reducer 30. The brake caliper 10 is configured to: fasten the speed reducer 30 and accommodate some components of the ball lead screw 20. The speed reducer 30 is configured to be in transmission connection to the brake motor 40 and the ball lead screw 20.

In this embodiment, the electro-mechanical brake apparatus 100 in this application further includes friction plates 51 and a caliper bracket 52. In the diagram of FIG. 2, there are two friction plates 51, and the two friction plates 51 are arranged on two sides of the brake disc 1002 in an axial direction of the brake disc 1002. The two friction plates 51 respectively face two outer surfaces that are of the brake disc 1002 and that are away from each other.

The caliper bracket 52 is fastened to the frame of the vehicle, the brake caliper 10 is slidably connected to the caliper bracket 52, and the two friction plates 51 are slidably connected to the caliper bracket 52. In the axial direction of the ball lead screw 20, a friction plate 51 that is in the two friction plates 51 and that is close to the ball lead screw 20 is defined as a first friction plate 511, and a friction plate 51 that is in the two friction plates 51 and that is away from the ball lead screw 20 is defined as a second friction plate 512. The first friction plate 511 is configured to abut against the ball lead screw 20, and the second friction plate 512 is configured to abut against the brake caliper 10.

When the electro-mechanical brake apparatus 100 works, the brake motor 40 outputs a brake force to the speed reducer 30. The speed reducer 30 adjusts a rotation speed and torque of the brake force and transfers an adjusted brake force to the ball lead screw 20. The ball lead screw 20 converts the brake force input by the speed reducer 30 into a thrust force in the axial direction of the ball lead screw 20, and pushes the first friction plate 511 to slide toward the brake disc 1002, until the first friction plate 511 is in contact with the brake disc 1002. The brake motor 40 continues to output the brake force and converts the brake force by the ball lead screw 20 into a thrust force. The first friction plate 511 abuts against the brake disc 1002 and pushes the caliper bracket 52 of the brake caliper 10 to slide. The brake caliper 10 drives the second friction plate 512 to slide toward the brake disc 1002 until the second friction plate 512 is in contact with the brake disc 1002. The first friction plate 511 and the second friction plate 512 are respectively in contact with the brake disc 1002 from two sides and generate a friction force to brake the brake disc 1002, so as to implement a braking function of the electro-mechanical brake apparatus 100 in this application.

In some other embodiments, a quantity of friction plates 51 may be further set to another quantity based on different structures or braking requirements of the wheel 1001. For example, there is one friction plate 51. This is not particularly limited in this application.

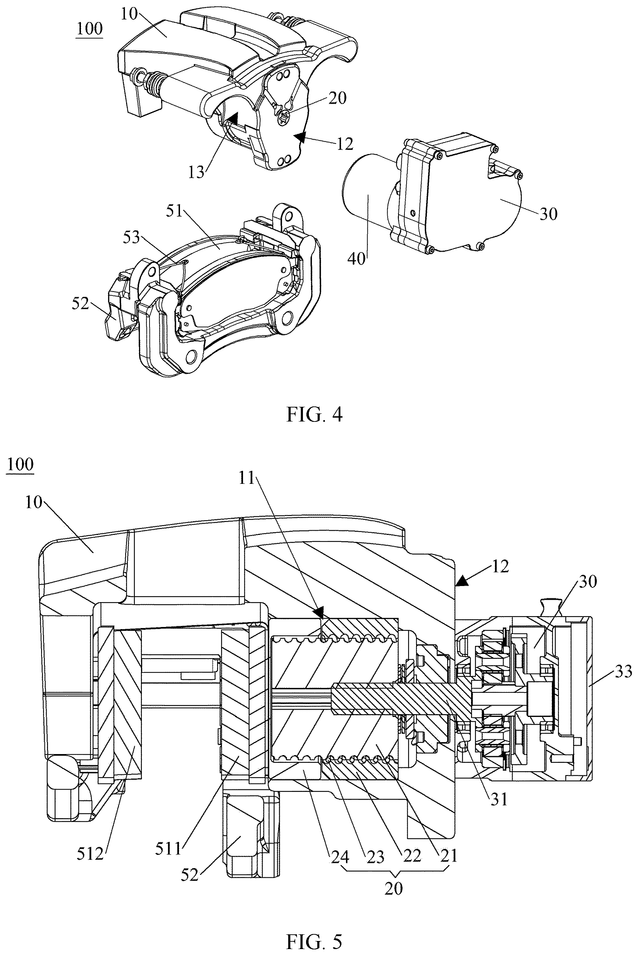

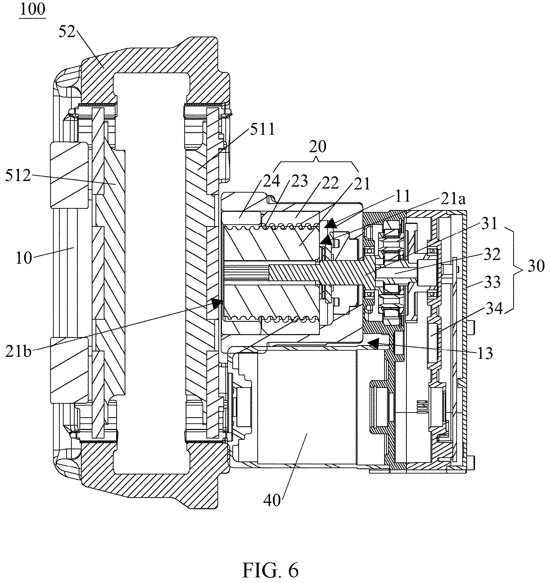

Refer to FIG. 3 to FIG. 6. FIG. 3 is a diagram of an outline structure of the electro-mechanical brake apparatus 100 according to an embodiment of this application, FIG. 4 is a diagram of an exploded structure of the electro-mechanical brake apparatus 100 according to an embodiment of this application, FIG. 5 is a diagram of a cross-sectional structure of the electro-mechanical brake apparatus 100 according to an embodiment of this application, and FIG. 6 is a diagram of a cross-sectional structure of the electro-mechanical brake apparatus 100 according to an embodiment of this application. FIG. 5 and FIG. 6 are diagrams of the cross-sectional structure of the electro-mechanical brake apparatus 100 at different angles of view.

As shown in FIG. 3 to FIG. 6, the ball lead screw 20 includes a lead screw 21 and a screw nut 22, and the speed reducer 30 includes an output shaft 31. The brake caliper 10 is configured to accommodate the lead screw 21 and the screw nut 22. An axis of the lead screw 21 coincides with an axis of the output shaft 31. In the axial direction of the lead screw 21, one end of the output shaft 31 is configured to drive the lead screw 21 to rotate relative to the brake caliper 10, and the screw nut 22 is configured to move with rotation of the lead screw 21 in the axial direction of the lead screw 21.

That is, when the electro-mechanical brake apparatus 100 works, the brake force output by the brake motor 40 drives the output shaft 31 of the speed reducer 30 to rotate relative to the brake caliper 10, so that the speed reducer 30 may drive, through the output shaft 31, the lead screw 21 to rotate, and the lead screw 21 rotates to drive the screw nut 22 to move in the axial direction of the lead screw 21. In this case, the two friction plates 51 slide toward each other to implement braking on the brake disc 1002. Therefore, a braking function of the electro-mechanical brake apparatus 100 in this application is implemented.

In another aspect, the electro-mechanical brake apparatus 100 in this application further includes a return spring 53. Two opposite ends of the return spring 53 are respectively configured to abut against the first friction plate 511 and the second friction plate 512. In a working process of the electro-mechanical brake apparatus 100, the return spring 53 is gradually compressed as the two friction plates 51 slide toward each other, and the compressed return spring 53 gradually releases an elastic force when the screw nut 22 moves in the axial direction of the lead screw 21 toward the speed reducer 30, so as to push the two friction plates 51 to slide in a direction away from the brake disc 1002. In this way, braking on the brake disc 1002 by the electro-mechanical brake apparatus 100 in this application is released.

That is, the return spring 53 is disposed, so that the electro-mechanical brake apparatus 100 in this application can control relative positions of the two friction plates 51 and the brake disc 1002 through mutual fitting between the return spring 53 and the screw nut 22. In this way, braking or braking release on the brake disc 1002 is implemented, and a braking function and a braking release function of the electro-mechanical brake apparatus 100 in this application are implemented.

In the diagram of FIG. 4, there are two return springs 53, and the two return springs 53 are spaced from each other in a direction perpendicular to an arrangement direction of the two friction plates 51. It may be understood that, the two return springs 53 may be disposed to ensure stress balance of the two friction plates 51, so that an offset generated in a sliding process of the friction plates 51 due to uneven stress of the friction plates 51 is avoided. This ensures braking reliability of the electro-mechanical brake apparatus 100 in this application.

In some other embodiments, a quantity of return springs 53 may be further set to another quantity based on different structures or braking requirements of the wheel 1001. For example, there is one return spring 53. This is not particularly limited in this application.

For ease of description, an end that is of the output shaft 31 and that is configured to drive the lead screw 21 to rotate is defined as a first end 31a, and an end that is of the output shaft 31 and that is away from the lead screw 21 in the axial direction of the lead screw 21 is defined as a second end 31b. An end face of the lead screw 21 faces the speed reducer 30 in the axial direction of the lead screw 21. The end face that is of the lead screw 21 and that faces the speed reducer 30 in the axial direction of the lead screw 21 is defined as a first end face 21a, and an end face that is of the lead screw 21 and that is away from the speed reducer 30 in the axial direction of the lead screw 21 is defined as a second end face 21b.

In an embodiment, the brake caliper 10 includes an accommodating cavity 11, and the accommodating cavity 11 is configured to accommodate the screw nut 22 and the lead screw 21. The output shaft 31 and the lead screw 21 are in transmission connection through a fitting structure between the first end 31a and the first end face 21a.

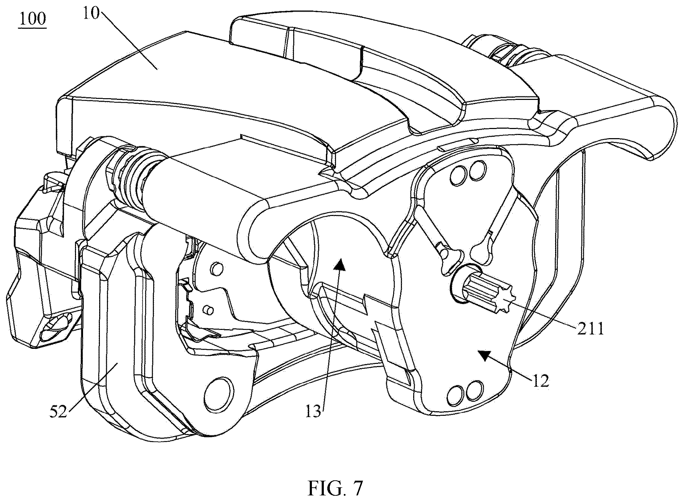

For example, in an embodiment, the first end face 21a includes an axial protrusion 211 (shown in FIG. 7), the axial protrusion 211 is configured to be embedded in the one end (namely, the first end 31a) of the output shaft 31 in the axial direction of the lead screw 21, and the axial protrusion 211 is configured to be in transmission connection to the first end 31a of the output shaft 31.

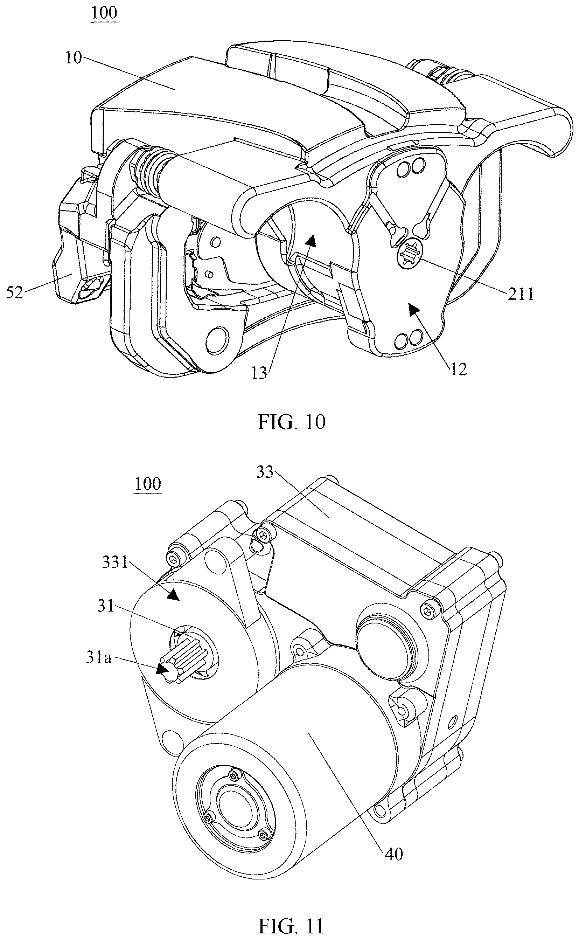

In another embodiment, the first end face 21a includes an axial protrusion 211 (shown in FIG. 10), the axial protrusion 211 is configured to nest the first end 31a of the output shaft 31 in the axial direction of the lead screw 21, and the axial protrusion 211 is configured to be in transmission connection to the first end 31a of the output shaft 31.

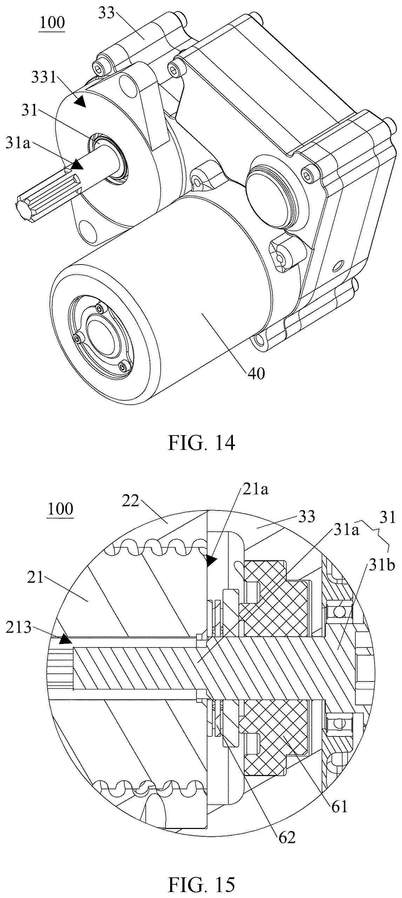

In another embodiment, the first end face 21a includes an axial groove 213 (shown in FIG. 15), the first end 31a of the output shaft 31 is configured to be embedded in the axial groove 213 in the axial direction of the lead screw 21, and the axial groove 213 is configured to be in transmission connection to the first end 31a of the output shaft 31.

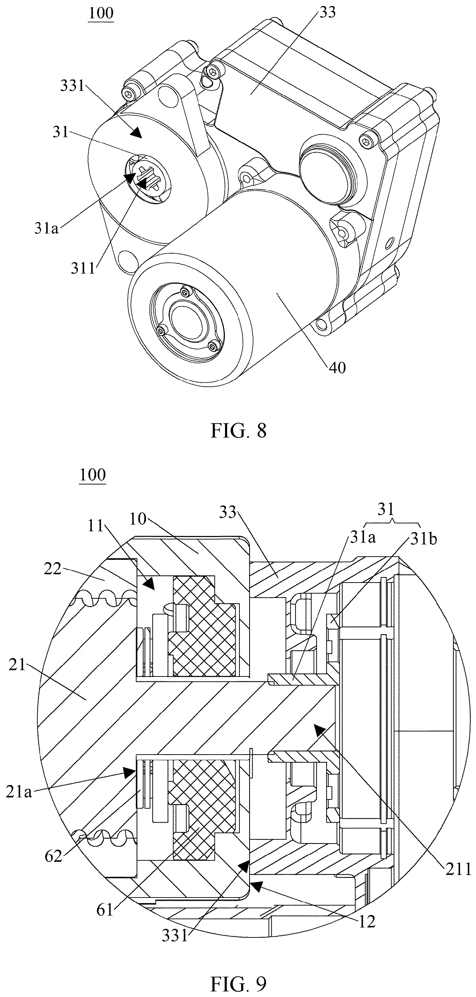

Specifically, refer to FIG. 7 to FIG. 9. FIG. 7 is a diagram of an outline structure of some internal components of the electro-mechanical brake apparatus 100 according to an embodiment of this application, FIG. 8 is a diagram of an outline structure of some internal components of the electro-mechanical brake apparatus 100 according to an embodiment of this application, and FIG. 9 is a diagram of a partial cross-sectional structure of some internal components of the electro-mechanical brake apparatus 100 according to an embodiment of this application.

In an embodiment, as shown in FIG. 7 to FIG. 9, in a radial direction of the lead screw 21, a diameter of the axial protrusion 211 is less than a diameter of the first end 31a of the output shaft 31. The first end 31a includes an axial fitting groove 311, and a groove opening of the axial fitting groove 311 faces the lead screw 21 in the axial direction of the lead screw 21. In the axial direction of the lead screw 21, the axial protrusion 211 extends out of the accommodating cavity 11 and extends into the axial fitting groove 311, to implement transmission connection between the lead screw 21 and the output shaft 31, and enable the lead screw 21 and the output shaft 31 to be in coaxial transmission.

Specifically, both an outer circumferential surface of the axial protrusion 211 and a groove wall of the axial fitting groove 311 are provided with connection structures that fit each other, so that the axial protrusion 211 can be embedded in the groove wall of the axial fitting groove 311 in the radial direction of the lead screw 21. In addition, a structure in which the axial protrusion 211 is embedded in the axial fitting groove 311 can be circumferentially engaged with a structure in the axial fitting groove 311, to implement circumferential transmission between the axial protrusion 211 and the axial fitting groove 311. For example, the axial protrusion 211 and the axial fitting groove 311 may be connected through a flat key or a spline.

That is, the axial protrusion 211 and the axial fitting groove 311 fit each other, so that in a working process of the electro-mechanical brake apparatus 100, a brake force output by the brake motor 40 can be transferred to the lead screw 21 through the output shaft 31 of the speed reducer 30, to rotate the lead screw 21.

It may be understood that the axial protrusion 211 and the axial fitting groove 311 fit each other, so that on a premise of implementing the transmission connection between the lead screw 21 and the output shaft 31, axial space required for the transmission connection between the lead screw 21 and the output shaft 31 can be reduced. In this way, an axial length of the electro-mechanical brake apparatus 100 is reduced, and miniaturization of the electro-mechanical brake apparatus 100 in this application is facilitated.

In another embodiment, the first end face 21a includes an axial protrusion 211, the axial protrusion 211 is configured to nest the first end 31a of the output shaft 31 in the axial direction of the lead screw 21, and the axial protrusion 211 is configured to be in transmission connection to the first end 31a of the output shaft 31.

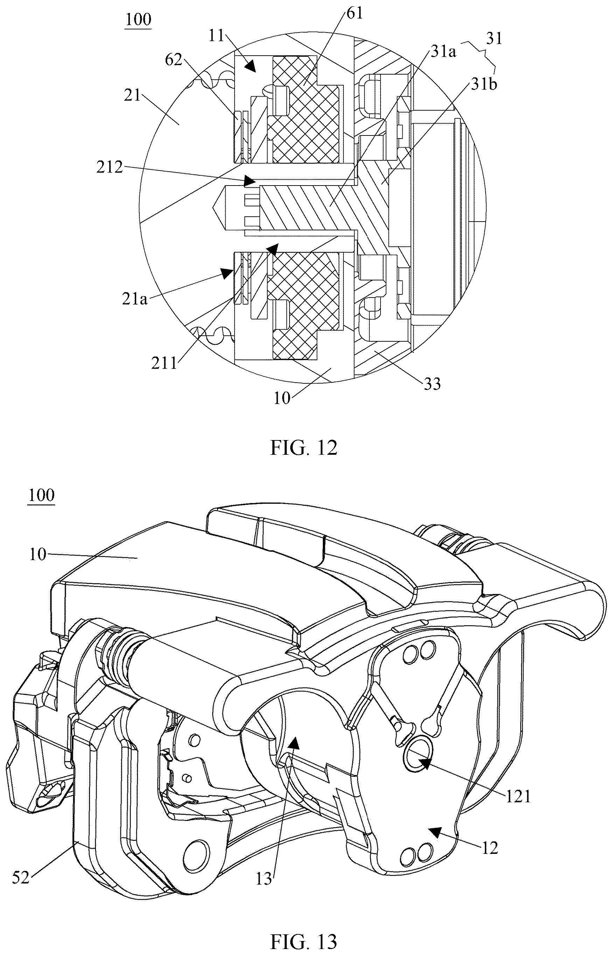

Specifically, refer to FIG. 10 to FIG. 12. FIG. 10 is a diagram of an outline structure of some internal components of the electro-mechanical brake apparatus 100 according to an embodiment of this application, FIG. 11 is a diagram of an outline structure of some internal components of the electro-mechanical brake apparatus 100 according to an embodiment of this application, and FIG. 12 is a diagram of a partial cross-sectional structure of some internal components of the electro-mechanical brake apparatus 100 according to an embodiment of this application.

As shown in FIG. 10 to FIG. 12, in the radial direction of the lead screw 21, a diameter of the axial protrusion 211 is greater than a diameter of the first end 31a of the output shaft 31. The axial protrusion 211 includes an axial accommodating groove 212, and a groove opening of the axial accommodating groove 212 faces the speed reducer 30 in the axial direction of the lead screw 21. In the axial direction of the lead screw 21, the first end 31a of the output shaft 31 extends into the axial accommodating groove 212, to implement transmission connection between the lead screw 21 and the output shaft 31, and enable the lead screw 21 and the output shaft 31 to be in coaxial transmission.

Specifically, both a groove wall of the axial accommodating groove 212 and an outer circumferential surface of the first end 31a of the output shaft 31 are provided with connection structures that fit each other, so that the first end 31a of the output shaft 31 can be embedded in the groove wall of the axial accommodating groove 212 in the radial direction of the lead screw 21, and a structure in which the first end 31a is embedded in the axial accommodating groove 212 can be circumferentially engaged with a structure in the axial accommodating groove 212. In this way, circumferential transmission between the axial protrusion 211 and the first end 31a of the output shaft 31 is implemented. For example, the axial protrusion 211 and the first end 31a of the output shaft 31 may be connected through a flat key or a spline.

That is, the axial accommodating groove 212 and the first end 31a of the output shaft 31 fit each other, so that in a working process of the electro-mechanical brake apparatus 100, a brake force output by the brake motor 40 can be transferred to the lead screw 21 through the output shaft 31 of the speed reducer 30, to rotate the lead screw 21.

Compared with the structure of the axial protrusion 211 used in the foregoing embodiment, in this embodiment of this application, the axial accommodating groove 212 is provided on the axial protrusion 211, so that the first end 31a of the output shaft 31 can partially extend into the accommodating cavity 11 by extending into the axial accommodating groove 212. In this way, a space occupation ratio of the axial protrusion 211 outside the brake caliper 10 is reduced, axial space required for the transmission connection between the lead screw 21 and the output shaft 31 can be further reduced, and the axial length of the electro-mechanical brake apparatus 100 is further reduced, so that miniaturization of the electro-mechanical brake apparatus 100 in this application is facilitated.

In another embodiment, the first end face 21a includes an axial groove 213, the first end 31a of the output shaft 31 is configured to be embedded in the axial groove 213 in the axial direction of the lead screw 21, and the axial groove 213 is configured to be in transmission connection to the first end 31a of the output shaft 31.

Specifically, refer to FIG. 13 to FIG. 15. FIG. 13 is a diagram of an outline structure of some internal components of the electro-mechanical brake apparatus 100 according to an embodiment of this application, FIG. 14 is a diagram of an outline structure of some internal components of the electro-mechanical brake apparatus 100 according to an embodiment of this application, and FIG. 15 is a diagram of a partial cross-sectional structure of some internal components of the electro-mechanical brake apparatus 100 according to an embodiment of this application.

As shown in FIG. 13 to FIG. 15, the groove opening of the axial groove 213 faces the speed reducer 30 in the axial direction of the lead screw 21. The first end 31a of the output shaft 31 of the speed reducer 30 extends into the accommodating cavity 11 through a cavity wall of the accommodating cavity 11, and extends into the axial groove 213 to embed or be embedded in the lead screw 21. In this way, transmission connection between the lead screw 21 and the output shaft 31 is implemented, and the lead screw 21 and the output shaft 31 are in coaxial transmission.

Specifically, both a groove wall of the axial groove 213 and an outer circumferential surface of the first end 31a of the output shaft 31 are provided with connection structures that fit each other, so that the first end 31a of the output shaft 31 can be embedded in the groove wall of the axial groove 213 in the radial direction of the lead screw 21, and a structure in which the first end 31a is embedded in the axial groove 213 can be circumferentially engaged with a structure in the axial groove 213. In this way, circumferential transmission between the axial groove 213 and the first end 31a of the output shaft 31 is implemented. For example, the axial groove 213 and the first end 31a of the output shaft 31 may be connected through a flat key or a spline.

That is, the axial groove 213 and the first end 31a of the output shaft 31 fit each other, so that in a working process of the electro-mechanical brake apparatus 100, a brake force output by the brake motor 40 can be transferred to the lead screw 21 through the output shaft 31 of the speed reducer 30, to rotate the lead screw 21.

The lead screw 21 is accommodated in the accommodating cavity 11. Compared with the structure of the axial protrusion 211 used in the foregoing embodiment, it may be understood that, in this embodiment of this application, the axial groove 213 is provided on the first end face 21a of the lead screw 21, so that the first end 31a of the output shaft 31 can completely extend into the accommodating cavity 11, and the output shaft 31 embeds or is embedded in the lead screw 21 in the brake caliper 10. In this way, axial space required for the transmission connection between the lead screw 21 and the output shaft 31 is further reduced. The axial length of the electro-mechanical brake apparatus 100 is further reduced, and miniaturization of the electro-mechanical brake apparatus 100 in this application is facilitated.

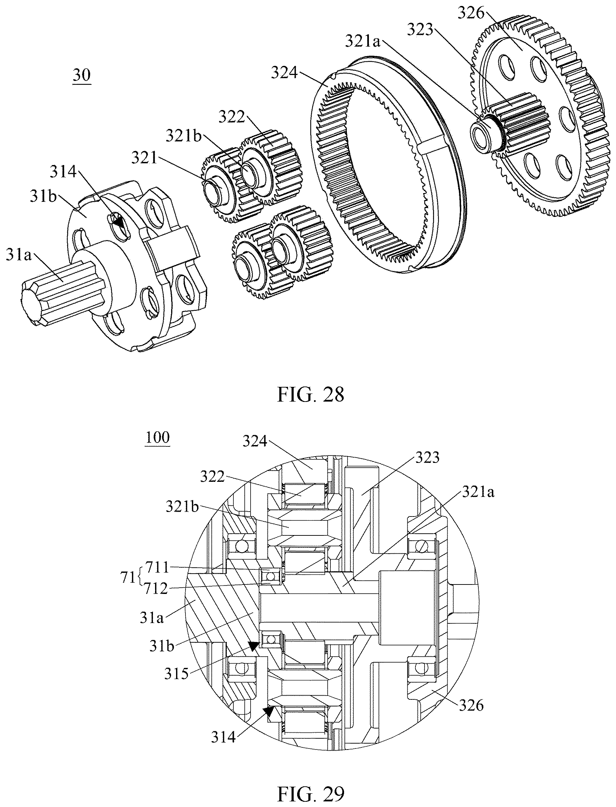

In another aspect, the first end 31a of the output shaft 31 is embedded in the axial groove 213, and the second end 31b of the output shaft 31 is configured to be in transmission connection to an internal component of the speed reducer 30. The first end 31a of the output shaft 31 embeds or is embedded in the lead screw 21, so that the first end 31a is coaxially fastened to the lead screw 21. In this way, the second end 31b is coaxially fastened to an internal gear of the speed reducer 30, or the second end 31b is directly constructed as an internal structure (for example, a planet carrier shown in FIG. 28) of the speed reducer 30, so that the speed reducer 30 can directly output a brake force through the output shaft 31. That is, the output shaft 31 is embedded in the axial groove 213, so that a transmission structure between the output shaft 31 and the internal structure of the speed reducer 30 is simplified, and an axial size of the speed reducer 30 is easily reduced.

Correspondingly, the electro-mechanical brake apparatus 100 is also used in the vehicle in this application, so that the electro-mechanical brake apparatus 100 in this application easily adapts to wheel space of the vehicle. This is conducive to a compact structure of the vehicle in this application.

In this embodiment, in a working process of the electro-mechanical brake apparatus 100, when the lead screw 21 rotates relative to the brake caliper 10, the screw nut 22 can move along an axis of the lead screw 21. When the lead screw 21 rotates around the axis of the lead screw 21 in a rotation direction, the screw nut 22 may move in a direction away from the speed reducer 30, and push the two friction plates 51 to slide toward each other, to implement braking on the brake disc 1002 and implement a braking function of the electro-mechanical brake apparatus 100.

Correspondingly, when the lead screw 21 rotates around the axis of the lead screw 21 in a direction opposite to the foregoing rotation direction, the screw nut 22 may move toward the speed reducer 30. In this case, the two friction plates 51 can move in a direction away from the brake disc 1002 under an action of the compressed return spring 53, so that the friction plates 51 release the brake disc 1002, to release braking on the brake disc 1002 by the electro-mechanical brake apparatus 100.

That is, the screw nut 22 fits the lead screw 21, so that the screw nut 22 can move toward or away from the speed reducer 30 based on different rotation directions of the lead screw 21, so as to cooperate with the friction plate 51 to brake or release braking on the brake disc 1002. For example, in an embodiment, a thread of an inner circumferential surface of the screw nut 22 is engaged with a thread of an outer circumferential surface of the lead screw 21.

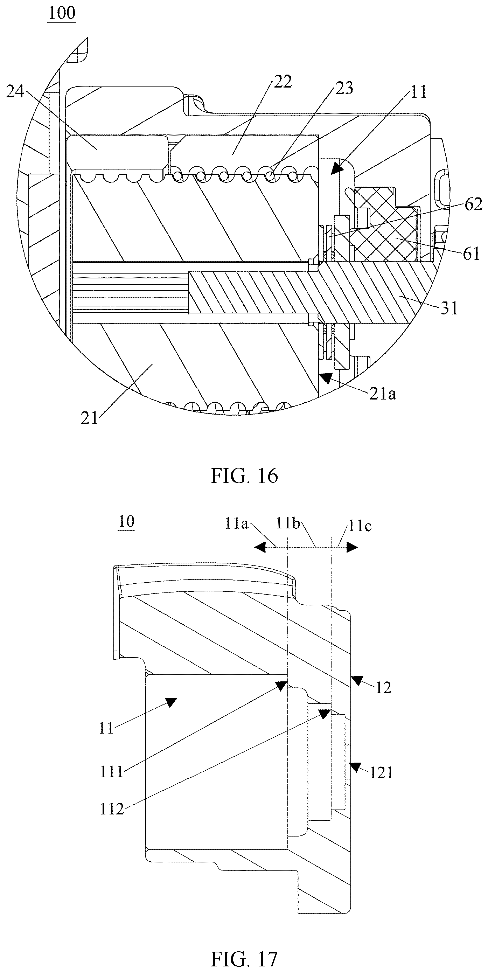

Specifically, as shown in FIG. 16, FIG. 16 is a diagram of a partial cross-sectional structure of the electro-mechanical brake apparatus 100.

As shown in FIG. 16, an axis of the screw nut 22 coincides with an axis of the lead screw 21. The screw nut 22 is sleeved on a periphery of the lead screw 21 and is in engaged transmission with the lead screw 21. It may be understood that, when the lead screw 21 rotates relative to the brake caliper 10, the lead screw may, based on mutual engagement between the thread of the outer circumferential surface of the lead screw 21 and the thread of the inner circumferential surface of the screw nut 22, make the screw nut 22 slide in the axial direction of the lead screw 21, and make the screw nut 22 have different movement directions based on the rotation direction of the lead screw 21. Therefore, a braking function of the electro-mechanical brake apparatus 100 in this application is ensured.

In another aspect, the screw nut 22 is sleeved on a periphery of the lead screw 21, so that axial space, occupied by the screw nut 22, of the electro-mechanical brake apparatus 100 in this application can be further reduced, and an axial length of the electro-mechanical brake apparatus 100 is reduced. In this way, miniaturization of the electro-mechanical brake apparatus 100 is facilitated.

The ball lead screw 20 further includes a rolling ball 23. In the radial direction of the lead screw 21, the rolling ball 23 is located between the lead screw 21 and the screw nut 22. Specifically, as shown in FIG. 16, there are a plurality of rolling balls 23, and the rolling balls 23 are spaced from each other around a thread line of the screw nut 22 in the circumferential direction of the lead screw 21. It may be understood that, the rolling ball 23 is disposed between the screw nut 22 and the lead screw 21, so that a friction force between the screw nut 22 and the lead screw 21 can be reduced, and transmission precision between the screw nut 22 and the lead screw 21 can be improved. In this way, conversion efficiency of the ball lead screw 20 for converting a brake force into a thrust force is improved, and braking efficiency and braking precision of the electro-mechanical brake apparatus 100 in this application are improved.

In the radial direction of the lead screw 21, the outer circumferential surface of the screw nut 22 is configured to abut against the inner circumferential surface of the accommodating cavity 11 to limit a radial position of the screw nut 22. The outer circumferential surface of the lead screw 21 is in engaged transmission with the inner circumferential surface of the screw nut 22. It may be understood that a radial position of the screw nut 22 is also limited by the limited radial position of the lead screw 21, so as to avoid a possibility that the lead screw 21 collides with the screw nut 22 due to radial movement in a rotation process. In this way, stable transmission between the lead screw 21 and the screw nut 22 is ensured, and braking efficiency of the electro-mechanical brake apparatus 100 in this application is improved.

In an embodiment, both a thread elevation angle of the thread on the outer circumferential surface of the lead screw 21 and a thread elevation angle of the thread on the inner circumferential surface of the screw nut 22 are less than or equal to a friction angle between the lead screw 21 and the screw nut 22. That is, the lead screw 21 and the screw nut 22 can be self-locked in the axial direction of the lead screw 21, to prevent the screw nut 22 from being driven by an elastic force in the compressed return spring 53 to move toward the speed reducer 30. In this way, braking reliability of the electro-mechanical brake apparatus 100 in this application is ensured.

In an embodiment, the electro-mechanical brake apparatus 100 in this application further includes a pressure sensor 61. An axis of the pressure sensor 61 coincides with an axis of the lead screw 21. In the axial direction of the lead screw 21, the pressure sensor 61 is arranged between an end face that is of the lead screw 21 and that faces the speed reducer 30 and a cavity wall of the accommodating cavity 11, and the pressure sensor 61 is configured to detect a brake force applied to the lead screw 21 in a working process of the electro-mechanical brake apparatus 100.

The pressure sensor 61 is further electrically connected to a drive circuit (not shown in the figure). In the working process of the electro-mechanical brake apparatus 100, when the brake force output by the brake motor 40 is sequentially transferred to the friction plate 51 through the speed reducer 30 and the ball lead screw 20, the brake force can be further transferred to the pressure sensor 61 by the lead screw 21, and is detected by the pressure sensor 61. The pressure sensor 61 transmits an obtained brake force signal to the drive circuit, and the drive circuit can adjust an output torque of the brake motor 40 based on a signal input by the pressure sensor 61, to adjust the brake force output by the brake motor 40.

In another aspect, in the working process of the electro-mechanical brake apparatus 100, when the screw nut 22 pushes the friction plates 51 to slide toward each other, the return spring 53 between the two friction plates 51 applies an axial thrust force to the screw nut 22, and the axial thrust force prevents the friction plates 51 from being in contact with the brake disc 1002. The screw nut 22 and the lead screw 21 are axially self-locked. It may be understood that, in the working process of the electro-mechanical brake apparatus 100, the pressure sensor 61 can further detect the elastic force provided by the return spring 53, and the thrust force applied to the friction plate 51 is detected through the elastic force and the brake force transmitted by the lead screw 21.

That is, the pressure sensor 61 is disposed, to implement real-time detection of a braking process and avoid a case in which the brake force output by the brake motor 40 does not match an actual braking effect. In this way, a power feedback function of the electro-mechanical brake apparatus 100 in this application is implemented, and braking reliability of the electro-mechanical brake apparatus 100 in this application is further ensured.

In an embodiment, the electro-mechanical brake apparatus 100 in this application further includes a thrust bearing 62, and an axis of the thrust bearing 62 coincides with an axis of the lead screw 21. In the axial direction of the lead screw 21, the thrust bearing 62 is arranged between the end face that is of the lead screw 21 and that faces the speed reducer 30 and the cavity wall of the accommodating cavity 11. The thrust bearing 62 is sleeved on a periphery of the lead screw 21 to support the lead screw 21.

The thrust bearing 62 can be further disposed to bear the axial thrust applied to the lead screw 21, so that the output shaft 31 is ensured to drive the lead screw 21 to rotate stably. This ensures braking reliability of the electro-mechanical brake apparatus 100 in this application.

In an embodiment, the electro-mechanical brake apparatus 100 in this application includes both the pressure sensor 61 and the thrust bearing 62. In the axial direction of the lead screw 21, both the pressure sensor 61 and the thrust bearing 62 are arranged between the end face that is of the lead screw 21 and that faces the speed reducer 30 and the cavity wall of the accommodating cavity 11. It may be understood that the pressure sensor 61 and the thrust bearing 62 fit each other, to further improve braking reliability of the electro-mechanical brake apparatus 100 in this application.

Specifically, in an embodiment, the first end face 21a includes an axial protrusion 211. In the radial direction of the lead screw 21, a diameter of the axial protrusion 211 is less than an inner diameter of the screw nut 22. In a direction that is in the axial direction of the lead screw 21 and that faces the speed reducer 30, the thrust bearing 62 and the pressure sensor 61 are sequentially sleeved on the axial protrusion 211.

For example, as shown in FIG. 7 to FIG. 12, the axial protrusion 211 is configured to be in transmission connection to the first end 31a of the output shaft 31. It may be understood that, the axial protrusion 211 whose diameter is less than the inner diameter of the screw nut 22 is disposed, so that on the premise of ensuring transmission connection between the axial protrusion 211 and the first end 31a of the output shaft 31, radial space of the axial protrusion 211 can be reduced, and a size of a structure in which the axial protrusion 211 embeds or is embedded in the first end 31a of the output shaft 31 can be controlled. In this way, an overall size of the electro-mechanical brake apparatus 100 in this application is reduced.

In another aspect, in the axial direction of the lead screw 21, the thrust bearing 62 is abutted between the first end face 21a of the lead screw 21 and the pressure sensor 61, so that the axial thrust force applied to the lead screw 21 can be transferred to the thrust bearing 62, and transferred to the pressure sensor 61 through the thrust bearing 62. The pressure sensor 61 detects the axial thrust force transferred by the thrust bearing 62, and transfers a corresponding signal to a drive circuit to control the brake force output by the brake motor 40, so as to control the brake force of the electro-mechanical brake apparatus 100 in this application.

It may be understood that the thrust bearing 62 is abutted between the first end face 21a of the lead screw 21 and the pressure sensor 61, and on the premise of ensuring that the lead screw 21 rotates stably, the thrust bearing 62 can block a path for transferring a rotation torque of the lead screw 21 to the pressure sensor 61, so that the pressure sensor 61 is still relative to the brake caliper 10 in the working process of the electro-mechanical brake apparatus 100, and the rotation torque of the lead screw 21 does not affect a detection effect of the pressure sensor 61 on the axial thrust force of the lead screw 21. In this way, detection precision of the pressure sensor 61 is ensured, and braking efficiency of the electro-mechanical brake apparatus 100 in this application is improved.

In an embodiment, in the radial direction of the lead screw 21, a diameter of the output shaft 31 is greater than a diameter of the axial protrusion 211, and an inner hole of the thrust bearing 62 and an inner hole of the pressure sensor 61 are separately configured to abut against an outer circumferential surface of the output shaft 31.

As shown in FIG. 7 to FIG. 9, the diameter of the output shaft 31 and the diameter of the axial protrusion 211 are set, so that the axial protrusion 211 can be embedded in the first end 31a of the output shaft 31, thereby ensuring reliable transmission connection between the lead screw 21 and the output shaft 31.

In another aspect, the inner hole of the thrust bearing 62 abuts against the outer circumferential surface of the output shaft 31, so that radial positioning of the thrust bearing 62 is implemented, and an axis of the thrust bearing 62 coincides with an axis of the lead screw 21. This avoids radial movement of the thrust bearing 62 caused by external impact, thereby ensuring that the lead screw 21 rotates stably.

The inner hole of the pressure sensor 61 abuts against the outer circumferential surface of the output shaft 31, so that radial positioning of the pressure sensor 61 is implemented, and an axis of the pressure sensor 61 coincides with an axis of the lead screw 21. This avoids impact on detection precision of the pressure sensor 61 caused by radial movement of the pressure sensor 61 under external impact.

In an embodiment, in the radial direction of the lead screw 21, the diameter of the axial protrusion 211 is greater than the diameter of the output shaft 31, and an inner hole of the thrust bearing 62 and an inner hole of the pressure sensor 61 are separately configured to abut against an outer circumferential surface of the axial protrusion 211.

As shown in FIG. 10 to FIG. 12, the diameter of the output shaft 31 and the diameter of the axial protrusion 211 are set, so that the axial protrusion 211 can nest the first end 31a of the output shaft 31, thereby ensuring reliable transmission connection between the lead screw 21 and the output shaft 31. In another aspect, the inner hole of the thrust bearing 62 abuts against the outer circumferential surface of the output shaft 31, to implement radial positioning of the thrust bearing 62 and ensure stable rotation of the lead screw 21. The inner hole of the pressure sensor 61 abuts against the outer circumferential surface of the output shaft 31, to implement radial positioning of the pressure sensor 61 and avoid impact on detection precision of the pressure sensor 61 caused by radial movement of the pressure sensor 61 under external impact.

In an embodiment, the first end face 21a of the lead screw 21 includes an axial groove 213, where in the radial direction of the lead screw 21, a diameter of the axial groove 213 is less than an inner diameter of the screw nut 22. In a direction that is in the axial direction of the lead screw 21 and that faces the speed reducer 30, the thrust bearing 62 and the pressure sensor 61 are sequentially sleeved on the output shaft 31. An inner hole of the thrust bearing 62 and an inner hole of the pressure sensor 61 are separately configured to abut against an outer circumferential surface of the output shaft 31.

Specifically, as shown in FIG. 13 to FIG. 15, the axial groove 213 is configured to be in transmission connection to the first end 31a of the output shaft 31. It may be understood that, the axial groove 213 whose diameter is less than the inner diameter of the screw nut 22 is provided, so that on the premise of ensuring transmission connection between the axial groove 213 and the first end 31a of the output shaft 31, and a size of a structure in which the axial groove 213 embeds or is embedded in the first end 31a of the output shaft 31 can be controlled.

Compared with a structure of the axial protrusion 211 used in another embodiment, in this embodiment of this application, both the inner hole of the pressure sensor 61 and the inner hole of the thrust bearing 62 abut against the outer circumferential surface of the output shaft 31, so that inner diameters of the pressure sensor 61 and the thrust bearing 62 can be reduced on a premise of implementing radial positioning of the pressure sensor 61 and the thrust bearing 62. In this way, radial sizes of the pressure sensor 61 and the thrust bearing 62 are reduced. This is conducive to miniaturization of the electro-mechanical brake apparatus 100 in this application.

In an embodiment, in the axial direction of one lead screw 21, a length of the lead screw 21 is greater than a length of the screw nut 22.

Specifically, as shown in FIG. 7 to FIG. 15, because the screw nut 22 and the lead screw 21 are in transmission engagement, the screw nut 22 slides in the axial direction of the lead screw 21 or away from the speed reducer 30 when the lead screw 21 rotates. In addition, the axis of the screw nut 22 coincides with the axis of the lead screw 21, it may be understood that, the lead screw 21 whose axial length is greater than an axial length of the screw nut 22 can be disposed to ensure that in an axial sliding process of the screw nut 22, a thread on the inner circumferential surface of the screw nut 22 is always engaged with a thread on the outer circumferential surface of the lead screw 21, so that an engaged transmission effect between the screw nut 22 and the lead screw 21 is ensured. This ensures braking stability of the electro-mechanical brake apparatus 100 in this application.

In another aspect, the lead screw 21 having a large axial size is disposed, so that a possibility that the screw nut 22 is separated from the lead screw 21 in the axial sliding process can be reduced, and the engaged transmission effect between the screw nut 22 and the lead screw 21 can be further ensured. This ensures braking stability of the electro-mechanical brake apparatus 100 in this application.

In an embodiment, in the axial direction of the lead screw 21, the accommodating cavity 11 includes a first segment 11a (refer to FIG. 17) and a second segment 11b (refer to FIG. 17) that are connected to each other, where an inner circumferential surface of the first segment 11a is configured to abut against the outer circumferential surface of the screw nut 22, and the inner circumferential surface of the second segment 11b is configured to abut against the outer circumferential surface of the pressure sensor 61. In the radial direction of the lead screw 21, a diameter of the inner circumferential surface of the second segment 11b is less than a diameter of the inner circumferential surface of the first segment 11a and is greater than an inner diameter of the screw nut 22. In the axial direction of the lead screw 21, a length of the second segment 11b is less than or equal to a sum of the length of the thrust bearing 62 and the length of the pressure sensor 61.

Specifically, as shown in FIG. 17, FIG. 17 is a diagram of a partially enlarged structure of the brake caliper 10 of the electro-mechanical brake apparatus 100. Refer to FIG. 16.

As shown in FIG. 16 and FIG. 17, the first segment 11a of the accommodating cavity 11 is configured to support the screw nut 22, so that the screw nut 22 can slide axially in the first segment 11a of the accommodating cavity 11. The diameter of the inner circumferential surface of the first segment 11a is greater than the diameter of the inner circumferential surface of the second segment 11b, and both an axis of the first segment 11a and an axis of the second segment 11b coincide with an axis of the lead screw 21, so that a first step surface 111 is formed between the first segment 11a and the second segment 11b. The first step surface 111 is annular, and the first step surface 111 is away from the speed reducer 30 in the axial direction of the lead screw 21.

The diameter of the inner circumferential surface of the second segment 11b is less than the inner diameter of the screw nut 22, and the outer circumferential surface of the screw nut 22 is configured to abut against the inner circumferential surface of the first segment 11a. It may be understood that the first step surface 111 is configured to abut against an end face that is of the screw nut 22 and that faces the speed reducer 30, to limit a sliding position of the screw nut 22 facing the speed reducer 30, so as to limit an axial displacement of the screw nut 22. In this way, a case in which the screw nut 22 falls off from the lead screw 21 while sliding axially is avoided, and braking reliability of the electro-mechanical brake apparatus 100 in this application is ensured.

In another aspect, because the diameter of the inner circumferential surface of the second segment 11b of the annular first step surface 111 is greater than the inner diameter of the screw nut 22, the inner circumferential surface of the screw nut 22 is configured to be in engaged transmission with the outer circumferential surface of the lead screw 21. It may be understood that a size of the second segment 11b can be further set to avoid interference between the first step surface 111 and the lead screw 21 in rotation, to ensure stable rotation of the lead screw 21. This ensures braking stability of the electro-mechanical brake apparatus 100 in this application.

In this embodiment, the second segment 11b of the accommodating cavity 11 is configured to accommodate the pressure sensor 61 and the thrust bearing 62. Because the screw nut 22 is accommodated in the first segment 11a of the accommodating cavity 11, it may be understood that, the pressure sensor 61 and the thrust bearing 62 are accommodated in the second segment 11b of the accommodating cavity 11, so that impact of axial sliding of the screw nut 22 on the pressure sensor 61 and the thrust bearing 62 can be avoided, and braking efficiency of the electro-mechanical brake apparatus 100 in this application is ensured.

In an embodiment, in the axial direction of the lead screw 21, the accommodating cavity 11 includes a third segment 11c, and the third segment 11c is connected to the first segment 11a through the second segment 11b. In the radial direction of the lead screw 21, a diameter of an inner circumferential surface of the third segment 11c is less than the diameter of the inner circumferential surface of the second segment 11b. In the axial direction of the lead screw 21, an end face that is of the third segment 11c and that faces the lead screw 21 abuts against an outer surface of the pressure sensor 61.

Specifically, as shown in FIG. 16 and FIG. 17, the diameter of the inner circumferential surface of the third segment 11c is less than the diameter of the inner circumferential surface of the second segment 11b, and an axis of the third segment 11c coincides with the axis of the lead screw 21, so that a second step surface 112 is formed between the second segment 11b and the third segment 11c. The second step surface 112 is annular, and the second step surface 112 is away from the speed reducer 30 in the axial direction of the lead screw 21.

The second step surface 112 is configured to abut against the outer surface of the pressure sensor 61. The pressure sensor 61 is accommodated in the second segment 11b of the accommodating cavity 11, and the diameter of the inner circumferential surface of the second segment 11b is less than the diameter of the inner circumferential surface of the second segment 11b. It may be understood that, the second step surface 112 is disposed to limit axial displacement of the pressure sensor 61, so that an axial thrust force transferred from the lead screw 21 to the pressure sensor 61 can be borne by the second step surface 112. In this way, an effect of detecting the axial thrust force of the lead screw 21 by the pressure sensor 61 is ensured.

In an embodiment, the first end face 21a of the lead screw 21 includes the axial protrusion 211. In the radial direction of the lead screw 21, the diameter of the inner circumferential surface of the third segment 11c is greater than the diameter of the axial protrusion 211.

Specifically, as shown in FIG. 7 to FIG. 12, the axial protrusion 211 needs to penetrate a cavity wall of the accommodating cavity 11, and the axial protrusion 211 is configured to be embedded in or nest the first end 31a of the output shaft 31 It may be understood that, the third segment 11c that is of the accommodating cavity 11 and that has a large diameter of the inner circumferential surface is disposed to avoid interference between the axial protrusion 211 and the third segment 11c of the accommodating cavity 11 when the axial protrusion 211 rotates with the output shaft 31 on the premise of ensuring that the axial protrusion 211 can pass through the cavity wall of the accommodating cavity 11. This ensures braking stability of the electro-mechanical brake apparatus 100 in this application.

In an embodiment, the first end face 21a of the lead screw 21 includes the axial groove 213. In the radial direction of the lead screw 21, the diameter of the inner circumferential surface of the third segment 11c is greater than the diameter of the first end 31a of the output shaft 31.

Specifically, as shown in FIG. 13 to FIG. 15, the first end 31a of the output shaft 31 needs to penetrate the cavity wall of the accommodating cavity 11 to extend into the accommodating cavity 11, and embeds or is embedded in the axial groove 213 in the accommodating cavity 11. It may be understood that, the third segment 11c that is of the accommodating cavity 11 and that has a large diameter of the inner circumferential surface is disposed to avoid interference and extrusion between the output shaft 31 in rotation and the third segment 11c of the accommodating cavity 11 on the premise of ensuring that the first end 31a of the output shaft 31 can pass through the cavity wall of the accommodating cavity 11. This ensures braking stability of the electro-mechanical brake apparatus 100 in this application.

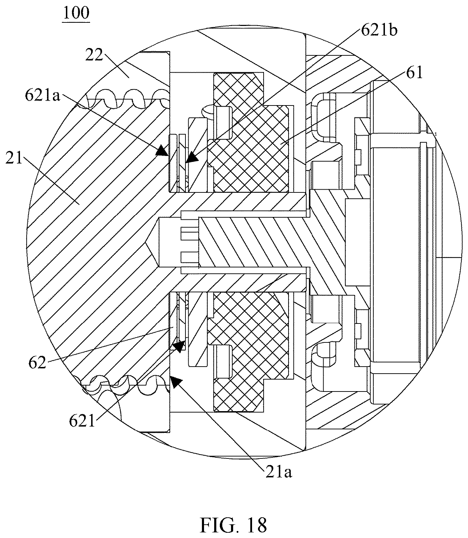

In an embodiment, in the axial direction of the lead screw 21, the thrust bearing 62 includes two opposite side faces 621 (refer to FIG. 18), where one side face 621 is attached to the first end face 21a of the lead screw 21, and the other side face 621 is attached to another outer surface of the pressure sensor 61, where an outer diameter of one side face 621 is less than or equal to an outer diameter of the first end face 21a, and an outer diameter of the other side face 621 is less than or equal to an outer diameter of the another outer surface.

Specifically, as shown in FIG. 18, FIG. 18 is a diagram of a partially enlarged structure of some internal components of the electro-mechanical brake apparatus 100. Refer to FIG. 9, FIG. 12, and FIG. 15.

As shown in FIG. 9, FIG. 12, FIG. 15, and FIG. 18, in the axial direction of the lead screw 21, two opposite side faces 621 of the thrust bearing 62 are defined as a first side face 621a and a second side face 621b respectively. The first side face 621a of the thrust bearing 62 is closer to the first end face 21a of the lead screw 21 than the second side face 621b of the thrust bearing 62. That is, the first side face 621a of the thrust bearing 62 is attached to the first end face 21a of the lead screw 21, and the second side face 621b of the thrust bearing 62 is attached to the outer surface of the pressure sensor 61.

It may be understood that, sizes of the first side face 621a of the thrust bearing 62 and the first end face 21a of the lead screw 21 are set, and sizes of the second side face 621b of the thrust bearing 62 and the outer surface of the pressure sensor 61 are set to ensure an effect of transferring the axial thrust force of the thrust bearing 62 to the lead screw 21, and improve a force condition of the pressure sensor 61. In this way, the axial thrust force of the lead screw 21 can be transferred to the pressure sensor 61 through the thrust bearing 62, so that reliable working of the pressure sensor 61 is ensured.

In an embodiment, an inner circumferential surface of the first end 31a of the output shaft 31 includes at least one radial protrusion 312, and the at least one radial protrusion 312 is configured to nest the axial protrusion 211.

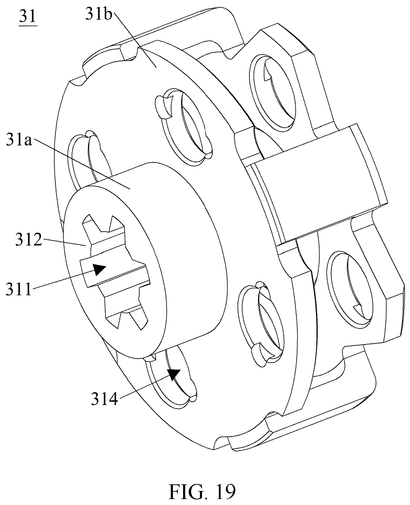

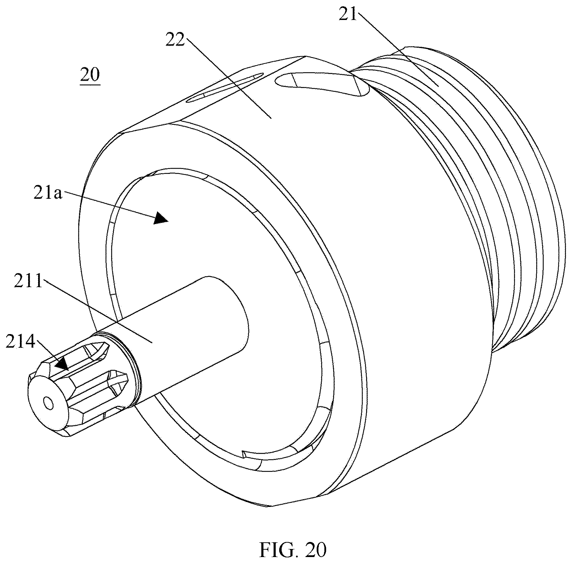

Specifically, refer to FIG. 19 and FIG. 20. FIG. 19 is a diagram of an outline structure of the output shaft 31 of the speed reducer 30 of the electro-mechanical brake apparatus 100, and FIG. 20 is a diagram of a partial structure of the ball lead screw 20 of the electro-mechanical brake apparatus 100. Refer to FIG. 7 to FIG. 9.

As shown in FIG. 7, FIG. 8, FIG. 9, FIG. 19, and FIG. 20, the first end face 21a of the lead screw 21 includes the axial protrusion 211, the axial protrusion 211 penetrates the cavity wall of the accommodating cavity 11 and extends out of the brake caliper 10, and the axial protrusion 211 is configured to be embedded in the first end 31a of the output shaft 31. The outer circumferential surface of the axial protrusion 211 is provided with a radial fitting groove 214, the first end 31a of the output shaft 31 is provided with an axial fitting groove 311, and the radial protrusion 312 is provided on an inner circumferential surface of the axial fitting groove 311, to form a structure similar to a flat key or a spline.

In the diagram of FIG. 19, there are a plurality of radial protrusions 312, and the plurality of radial protrusions 312 are spaced from each other on the inner circumferential surface of the axial fitting groove 311 in a circumferential direction of the lead screw 21. A quantity of radial fitting grooves 214 is the same as a quantity of radial protrusions 312, and a manner in which the radial fitting grooves 214 are arranged in the circumferential direction of the lead screw 21 is the same as that of the radial protrusions 312.

In this embodiment, each radial protrusion 312 can be embedded in the radial fitting groove 214 on the outer circumferential surface of the axial protrusion 211, so that a brake force transferred to the output shaft 31 can be transferred to the axial protrusion 211 through mutual engagement between the radial protrusion 312 and the radial fitting groove 214. It may be understood that, the radial protrusion 312 is disposed, so that difficulty of coaxial transmission between the axial protrusion 211 and the output shaft 31 is reduced, and the diameter of the outer circumferential surface of the axial protrusion 211 can be reduced.

That is, the radial protrusion 312 is disposed to control a diameter of the outer circumferential surface of the axial protrusion 211, so that a size of a structure in which the lead screw 21 embeds or is embedded in the first end 31a of the output shaft 31 is controlled. In this way, a radial size of a connection structure between the lead screw 21 and the output shaft 31 is smaller, and miniaturization of the electro-mechanical brake apparatus 100 in this application is facilitated.

It may be understood that, in some other embodiments, the quantity of radial protrusions 312 may alternatively be set based on an actual transmission requirement between the output shaft 31 and the lead screw 21. For example, the quantity of radial protrusions 312 is one. This is not particularly limited in this application.

In an embodiment, the first end 31a of the output shaft 31 penetrates the cavity wall of the accommodating cavity 11 in the axial direction of the lead screw 21 and is located in the accommodating cavity 11. The outer circumferential surface of the first end 31a of the output shaft 31 includes at least one radial groove 313, and the at least one radial groove 313 is configured to be embedded in one axial groove 213 or one axial protrusion 211.

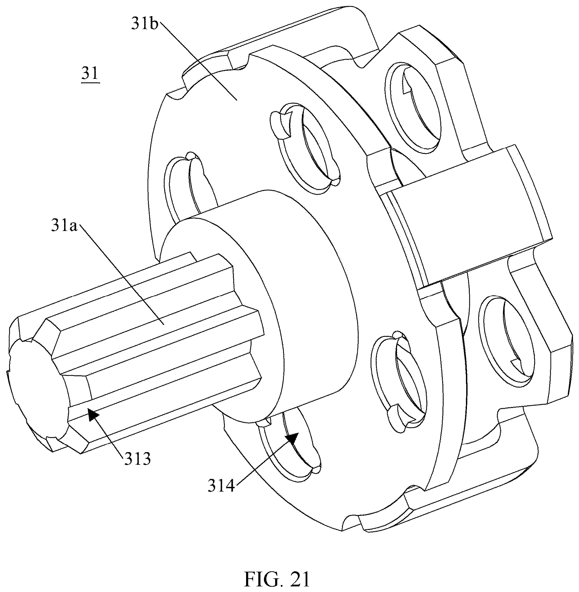

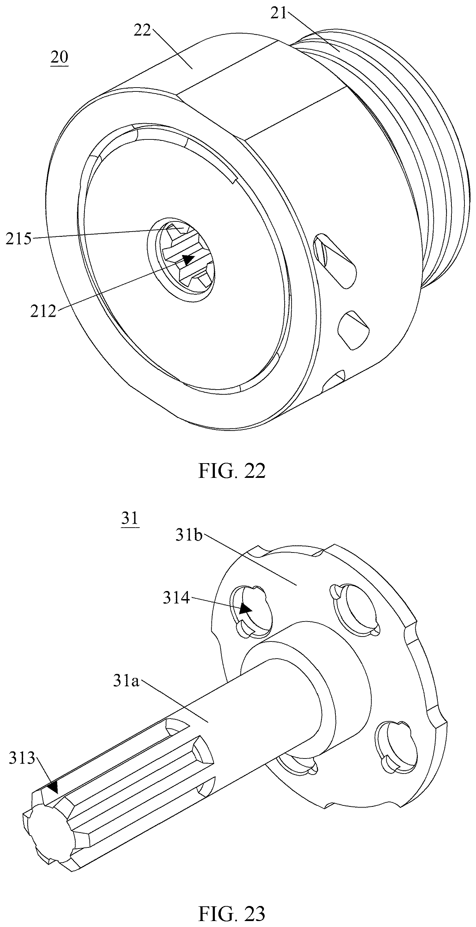

For example, in an embodiment, refer to FIG. 21 and FIG. 22. FIG. 21 is a diagram of an outline structure of the output shaft 31 of the speed reducer 30 of the electro-mechanical brake apparatus 100, and FIG. 22 is a diagram of a partial structure of the ball lead screw 20 of the electro-mechanical brake apparatus 100. Refer to FIG. 10 to FIG. 12.

As shown in FIG. 10, FIG. 11, FIG. 12, FIG. 21, and FIG. 22, the first end face 21a of the lead screw 21 includes the axial protrusion 211, where the axial protrusion 211 is configured to nest the first end 31a of the output shaft 31. The axial accommodating groove 212 is provided on the axial protrusion 211, and in the radial direction of the lead screw 21, a radial fitting protrusion 215 is disposed on an inner circumferential surface of the axial accommodating groove 212, to form a structure similar to a flat key or a spline.

In the diagram of FIG. 21, there are a plurality of radial grooves 313 on the first end 31a of the output shaft 31, and the plurality of radial grooves 313 are spaced from each other on the outer circumferential surface of the first end 31a of the output shaft 31 in the circumferential direction of the lead screw 21. A quantity of radial fitting protrusions 215 is the same as a quantity of radial grooves 313, a manner in which the radial fitting protrusions 215 are arranged in the circumferential direction of the lead screw 21 is the same as that of the radial groove 313.

In this embodiment, each radial fitting protrusion 215 is embedded in one radial groove 313, so that the brake force transferred to the output shaft 31 can be transferred to the axial protrusion 211 through mutual engagement between the radial fitting protrusion 215 and the radial groove 313. It may be understood that, the radial groove 313 is provided, so that difficulty of coaxial transmission between the axial protrusion 211 and the output shaft 31 is reduced, and the diameter of the outer circumferential surface of the first end 31a of the output shaft 31 can be reduced.

That is, the radial groove 313 is provided to control a diameter of the outer circumferential surface of the first end 31a of the output shaft 31, so that a size of a structure in which the lead screw 21 embeds or is embedded in the first end 31a of the output shaft 31 is controlled. In this way, a radial size of a connection structure between the lead screw 21 and the output shaft 31 is smaller, and miniaturization of the electro-mechanical brake apparatus 100 in this application is facilitated.

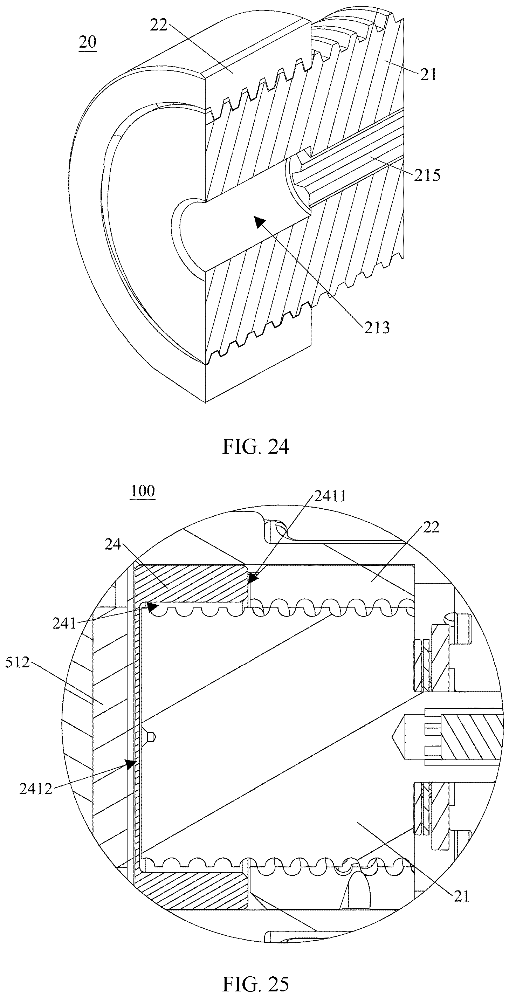

In another embodiment, refer to FIG. 23 and FIG. 24. FIG. 23 is a diagram of an outline structure of the output shaft 31 of the speed reducer 30 of the electro-mechanical brake apparatus 100, and FIG. 24 is a diagram of a partial structure of the ball lead screw 20 of the electro-mechanical brake apparatus 100. Refer to FIG. 13 to FIG. 15.

Similarly, when the first end face 21a of the lead screw 21 includes the axial groove 213, the output shaft 31 with the radial groove 313 is embedded in the axial groove 213, and each radial fitting protrusion 215 on the axial groove 213 is embedded in one radial groove 313, so that the diameter of the outer circumferential surface of the first end 31a of the output shaft 31 can also be controlled, and the size of the structure in which the lead screw 21 embeds or is embedded in the first end 31a of the output shaft 31 is controlled. In this way, a radial size of a connection structure between the lead screw 21 and the output shaft 31 is smaller, and miniaturization of the electro-mechanical brake apparatus 100 in this application is facilitated.

It may be understood that, in some other embodiments, the quantity of radial grooves 313 may alternatively be set based on an actual transmission requirement between the output shaft 31 and the lead screw 21. For example, the quantity of radial grooves 313 is one. This is not particularly limited in this application.

Therefore, based on the limitation of the foregoing embodiments, the electro-mechanical brake apparatus 100 in this application is connected to the thread of the screw nut 22 through the lead screw 21, so that the brake force output by the brake motor 40 can be transferred to the lead screw 21 through the speed reducer 30, to axially slide the screw nut 22 while the lead screw 21 rotates. The brake force is transferred to the two friction plates 51 through axial sliding of the screw nut 22, so that the two friction plates 51 slide toward the brake disc 1002, to brake the brake disc 1002. Therefore, a braking function of the electro-mechanical brake apparatus 100 in this application is implemented.

According to the electro-mechanical brake apparatus 100 in this application, the axial protrusion 211 or the axial groove 213 is alternatively disposed on the first end face 21a of the lead screw 21, so that the first end 31a of the output shaft 31 of the speed reducer 30 can be embedded in the axial protrusion 211 or the axial groove 213, or the first end 31a of the output shaft 31 of the speed reducer 30 can nest the axial protrusion 211, to implement transmission connection between the output shaft 31 and the lead screw 21. In this way, a space size required for transmission connection between the output shaft 31 and the lead screw 21 is reduced, and an axial length of the electro-mechanical brake apparatus 100 is reduced, so that miniaturization of the electro-mechanical brake apparatus 100 is facilitated. In this way, a structure of the electro-mechanical brake apparatus 100 in this application is compact.

Based on the electro-mechanical brake apparatus 100 in this application, the space size for transmission connection between the output shaft 31 and the lead screw 21 is reduced, so that the electro-mechanical brake apparatus 100 in this application is reduced in axial size, and is compact in structure. When the electro-mechanical brake apparatus 100 in this application is used in a vehicle, the electro-mechanical brake apparatus 100 in this application can output a brake force through the brake motor 40. The speed reducer 30, the ball lead screw 20, the brake caliper 10, and the friction plate 51 are used in the brake disc 1002, to implement a braking function of the vehicle. The electro-mechanical brake apparatus 100 has a compact structure, so that miniaturization to adapt to wheel space of the vehicle is facilitated, arrangement of internal components near the wheel 1001 of the vehicle is facilitated, and an overall size of the vehicle is controlled.

It may be understood that the structure of the electro-mechanical brake apparatus 100 in this application may be further applied to another use scenario. For example, the structure of the electro-mechanical brake apparatus 100 may be further used in a steering system, a machine tool device, and the like. This is not particularly limited in this application.

For ease of description, in subsequent embodiments of this application, the embodiments shown in FIG. 10 to FIG. 12 are used as an example for description. It may be understood that various limitations in subsequent embodiments are also applicable to the embodiments shown in FIG. 7 to FIG. 9 and the embodiments shown in FIG. 13 to FIG. 15.

In an embodiment, the ball lead screw 20 includes a piston 24, and the piston 24 is partially accommodated in the accommodating cavity 11. The piston 24 and the screw nut 22 are sequentially arranged in a direction that is in the axial direction of one lead screw 21 and that faces the speed reducer 30. The piston 24 includes a groove 241, a groove opening 2411 of the groove 241 faces the speed reducer 30 in the axial direction of one lead screw 21, and the groove 241 is configured to partially accommodate the lead screw 21. In the axial direction of one lead screw 21, a sum of a groove depth of the groove 241 and a length of the screw nut 22 is greater than or equal to a length of the lead screw 21.

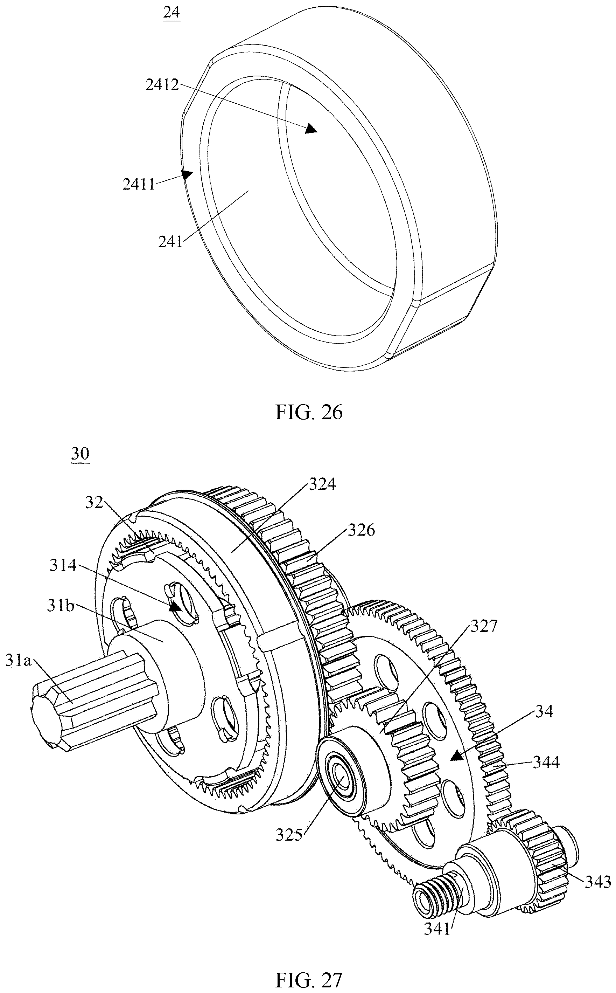

For details, refer to FIG. 25 and FIG. 26. FIG. 25 is a diagram of a partially enlarged structure of some internal components of the electro-mechanical brake apparatus 100, and FIG. 26 is a diagram of an outline structure of the piston 24 of the ball lead screw 20 of the electro-mechanical brake apparatus 100.

As shown in FIG. 25 and FIG. 26, an axis of the piston 24 coincides with an axis of the lead screw 21. In the axial direction of the lead screw 21, the piston 24 is located on a side that is of the screw nut 22 and that is away from the speed reducer 30. The lead screw 21 partially extends into the groove 241 of the piston 24, and the screw nut 22 sleeved on a periphery of the lead screw 21 is enabled to abut against the piston 24. A groove bottom 2412 of the piston 24 may extend out of the accommodating cavity 11, and abuts against one friction plate 51.

When the electro-mechanical brake apparatus 100 in this application works, the brake force output by the brake motor 40 is transferred to the ball lead screw 20 through the speed reducer 30, and the lead screw 21 is connected to the thread of the screw nut 22, so that the screw nut 22 slides in a direction away from the speed reducer 30, to push the piston 24 to slide in the axial direction of the lead screw 21. Under the action of the brake force, the piston 24 makes the groove bottom 2412 of the piston 24 extend out of the accommodating cavity 11, and pushes the friction plate 51 to move toward the brake disc 1002 of the wheel 1001. Therefore, a braking function of the electro-mechanical brake apparatus 100 in this application is implemented.

In this embodiment, in the axial direction of the lead screw 21, the groove depth of the groove 241, the length of the screw nut 22, and the length of the lead screw 21 are set, so that the lead screw 21 extends into the second end face 21b of the groove 241 and is spaced away from the groove bottom 2412 of the groove 241. In this way, interference between the lead screw 21 and the groove bottom 2412 of the groove 241 during rotation is avoided. This ensures braking stability of the electro-mechanical brake apparatus 100 in this application.

In another aspect, sizes of the groove 241, the screw nut 22, and the lead screw 21 are set, so that the groove bottom 2412 of the groove 241 can extend out of the accommodating cavity 11 and press against the friction plate 51. Because an area of the groove bottom 2412 of the groove 241 of the piston 24 is large, correspondingly, an area of the piston 24 for abutting against the friction plate 51 is also large, so that stability of transferring the brake force by the piston 24 to the friction plate 51 is improved, and reliable transfer of the brake force by the electro-mechanical brake apparatus 100 in this application is implemented.

In an embodiment, the speed reducer 30 includes a planetary gear set 32 (refer to FIG. 27), the other end (the second end 31b) of the output shaft 31 includes at least one shaft hole 314 (refer to FIG. 28), the at least one shaft hole 314 is configured to fasten at least one transmission shaft 321 (refer to FIG. 28), and the at least one transmission shaft 321 is configured to be in transmission connection to at least one planetary gear 322 of the planetary gear set 32 (refer to FIG. 28). In the axial direction of the lead screw 21, the planetary gear set 32 is arranged on a side that is of the output shaft 31 and that is away from the lead screw 21. In the radial direction of the lead screw 21, a diameter of the second end 31b of the output shaft 31 is greater than the diameter of the first end 31a of the output shaft 31, and an axis of each shaft hole 314 of the at least one shaft hole 314 is offset from an axis of the lead screw 21.

For details, refer to FIG. 27 and FIG. 28. FIG. 27 is a diagram of a structure of an internal component of the speed reducer 30 of the electro-mechanical brake apparatus 100, and FIG. 28 is a diagram of an exploded structure of some internal components of the speed reducer 30 of the electro-mechanical brake apparatus 100.

As shown in FIG. 27 and FIG. 28, in this embodiment of this application, the speed reducer 30 further includes the planetary gear set 32. The planetary gear set 32 is accommodated in a housing 33 of the speed reducer. The planetary gear set 32 is rotatable relative to the housing 33 of the speed reducer. Through the planetary gear set 32, the brake motor 40 and the output shaft 31 are in transmission connection.

When the brake motor 40 outputs the brake force, the brake force is transferred to the planetary gear set 32. The planetary gear set 32 is configured to: adjust torque and a rotation speed of the brake force, and transfer the adjusted brake force to the output shaft 31. The output shaft 31 transfers the brake force to the ball lead screw 20, and the ball lead screw 20 pushes the two friction plates 51 under the action of the brake force to brake the brake disc 1002. Therefore, a braking function of the electro-mechanical brake apparatus 100 in this application is implemented.

In this embodiment, compared with a common gear set, the planetary gear set 32 applied in this application can reduce a size of a deceleration mechanism while ensuring a transmission ratio of a speed reducer 30. It may be understood that, disposing of the planetary gear set 32 in the speed reducer 30 can reduce a space occupation ratio of the speed reducer 30 in the electro-mechanical brake apparatus 100 in this application. In this way, an overall size of the electro-mechanical brake apparatus 100 in this application is reduced, and miniaturization of the electro-mechanical brake apparatus 100 in this application is facilitated.

In another aspect, compared with a common gear set, the planetary gear set 32 applied in this application further has a large transmission ratio. In other words, the disposing of the planetary gear set 32 in the speed reducer 30 can further increase torque transferred by the speed reducer 30 to the ball lead screw 20. In this way, a thrust force transferred by the ball lead screw 20 to the friction plate 51 is improved, and a brake force of the electro-mechanical brake apparatus 100 in this application is improved. Therefore, braking efficiency of the electro-mechanical brake apparatus 100 in this application is improved.

In this embodiment, the planetary gear set 32 includes a transmission shaft 321, a planetary gear 322, a sun gear 323, and a gear ring 324. Both an axis of the sun gear 323 and an axis of the gear ring 324 coincide with an axis of the lead screw 21. There are a plurality of planetary gears 322, and an axis of each planetary gear 322 is parallel to the axis of the lead screw 21. In the axial direction of the lead screw 21, the planetary gear set 32 is located on a side that is of the output shaft 31 and that is away from the lead screw 21.

There are a plurality of transmission shafts 321. One transmission shaft 321 of the plurality of transmission shafts 321 is configured to coaxially fasten the sun gear 323, and the remaining transmission shafts 321 are configured to coaxially fasten each planetary gear 322. For ease of description, the transmission shaft 321 for coaxially fastening the sun gear 323 is defined as a first transmission shaft 321a, and the transmission shaft 321 for coaxially fastening the planetary gear 322 is defined as a second transmission shaft 321b. A quantity of second transmission shafts 321b is equal to a quantity of planetary gears 322, an axis of the second transmission shaft 321b is parallel to the axis of the lead screw 21, and an axis of the first transmission shaft 321a coincides with the axis of the lead screw 21.

In this embodiment, in the axial direction of a lead screw 21, the sun gear 323 is arranged on a side that is of the output shaft 31 and that is away from the lead screw 21. The sun gear 323 is rotatably connected to the second end 31b of the output shaft 31 through the first transmission shaft 321a. The gear ring 324 is disposed on a periphery of the sun gear 323, and is fastened to the housing 33 of the speed reducer 30. Through each planetary gear 322, the gear ring 324 and the sun gear 323 are in transmission connection. Each second transmission shaft 321b is coaxially fastened to one planetary gear 322, and is fastened in one shaft hole 314, so that the second end 31b of the output shaft 31 forms a planetary frame structure of the planetary gear set 32.

When the electro-mechanical brake apparatus 100 in this application works, the brake force output by the brake motor 40 can be transferred to the sun gear 323 of the planetary gear set 32, and the sun gear 323 rotates around the axis of the lead screw 21. The sun gear 323 transfers the brake force to each planetary gear 322, so that each planetary gear 322 also rotates around the axis of the lead screw 21. The planetary gear 322 in rotation transfers the brake force to the second end 31b of the output shaft 31, and the output shaft 31 transfers the brake force to the friction plate 51 through the ball lead screw 20, to implement a braking function of the electro-mechanical brake apparatus 100 in this application.

In this embodiment, according to the electro-mechanical brake apparatus 100 in this application, the second end 31b of the output shaft 31 is formed as a planet carrier structure of the planetary gear set 32, so that the planet carrier structure in the planetary gear set 32 is omitted. In this way, the output shaft 31 directly uses each planetary gear 322 to output the brake force, to reduce an axial size of the speed reducer 30. Therefore, an axial size of the electro-mechanical brake apparatus 100 in this application is reduced, to facilitate miniaturization of the electro-mechanical brake apparatus 100 in this application.

In an embodiment, the second end 31b of the output shaft 31 includes a bearing accommodating groove 315 (refer to FIG. 29), and a groove opening of the bearing accommodating groove 315 is away from the lead screw 21 in the axial direction of the lead screw 21. The bearing accommodating groove 315 is configured to fasten an outer ring of a bearing (the first bearing 71), and an inner ring of the bearing is configured to fasten the transmission shaft 321 (the first transmission shaft 321a) of the sun gear 323.

Specifically, as shown in FIG. 29, FIG. 29 is a diagram of a partially enlarged structure of some internal components of the electro-mechanical brake apparatus 100.

As shown in FIG. 29, the electro-mechanical brake apparatus 100 in this application further includes a first bearing 71, and the first bearing 71 includes an outer ring 711 and an inner ring 712. The outer ring 711 of the first bearing 71 is configured to fasten a groove wall of the bearing accommodating groove 315, and the inner ring 712 of the first bearing 71 is configured to fasten the first transmission shaft 321a, to implement rotatable connection between the sun gear 323 and the output shaft 31, and limit a radial position of the sun gear 323.

The shaft hole 314 on the second end 31b of the output shaft 31 is offset from the axis of the lead screw 21. It may be understood that, the bearing accommodating groove 315 is provided, so that an axial spacing between the second end 31b of the output shaft 31 and the sun gear 323 is reduced, a structure between the output shaft 31 and the planetary gear set 32 is compact, and an axial size of the speed reducer 30 is reduced. This helps implement miniaturization of the electro-mechanical brake apparatus 100 in this application.

In an embodiment, in the axial direction of the lead screw 21, the brake caliper 10 and the housing 33 of the speed reducer 30 include two side walls that are fixedly attached, each side wall includes one avoidance hole, and the two avoidance holes are both configured to allow one output shaft 31 to pass through. In the radial direction of the lead screw 21, a diameter of one avoidance hole is greater than a diameter of the other avoidance hole. An inner circumferential surface of the one avoidance hole is configured to fasten an outer ring of another bearing (that is, the second bearing 72), and an inner ring of the another bearing is configured to fasten a middle segment of the output shaft 31.

For ease of description, two side walls that are fixedly attached between the brake caliper 10 and the housing 33 of the speed reducer 30 are defined as a first side wall 12 of the brake caliper 10 and a second side wall 331 of the housing 33 of the speed reducer 30.

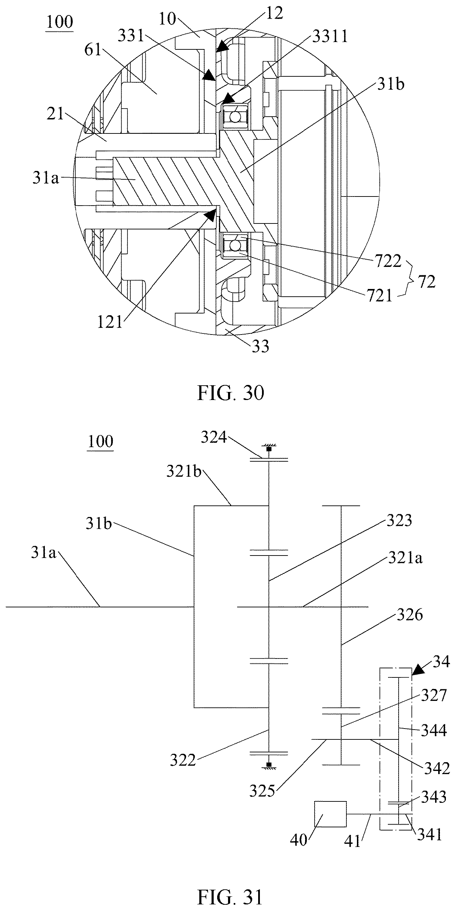

Specifically, as shown in FIG. 30, FIG. 30 is a diagram of a partially enlarged structure of some internal components of the electro-mechanical brake apparatus 100.

As shown in FIG. 30, the first side wall 12 includes a first avoidance hole 121, the second side wall 331 includes a second avoidance hole 3311, both an axis of the first avoidance hole 121 and an axis of the second avoidance hole 3311 coincide with an axis of the lead screw 21, and both the first avoidance hole 121 and the second avoidance hole 3311 are configured to allow the output shaft 31 to pass through.

In this embodiment, a diameter of the second avoidance hole 3311 is greater than a diameter of the first avoidance hole 121. The electro-mechanical brake apparatus 100 in this application further includes a second bearing 72, and the second bearing 72 includes an outer ring 721 and an inner ring 722. An inner circumferential surface of the second avoidance hole 3311 is configured to fasten the outer ring 721 of the second bearing 72, and the inner ring 722 of the second bearing 72 is configured to fasten the middle segment of the output shaft 31, to form a reliable support structure for the output shaft 31, and ensure stable rotation of the lead screw 21 driven by the output shaft 31.

In another aspect, the speed reducer 30 is fixedly attached to the brake caliper 10, so that in a working process of the electro-mechanical brake apparatus 100, after the ball lead screw 20 pushes the first friction plate 511 to abut against the brake disc 1002, the brake force of the ball lead screw 20 may push the housing 33 of the speed reducer 30 to slide through the lead screw 21, so as to drive the brake caliper 10 to slide. In this way, the ball lead screw 20 pushes the second friction plate 512 to slide toward the brake disc 1002. Therefore, a braking function of the electro-mechanical brake apparatus 100 in this application is implemented.

In another embodiment, the diameter of the first avoidance hole 121 is greater than the diameter of the second avoidance hole 3311. Correspondingly, the inner circumferential surface of the first avoidance hole 121 is configured to fasten the outer ring 721 of the second bearing 72, and the inner ring 722 of the second bearing 72 is configured to fasten the middle segment of the output shaft 31, so as to support the output shaft 31.

In an embodiment, in the axial direction of the lead screw 21, the brake motor 40 and the brake caliper 10 are arranged on a same side of the speed reducer 30. The brake caliper 10 includes an accommodating groove 13 (refer to FIG. 4), and the accommodating groove 13 and the ball lead screw 20 are spaced from each other in the radial direction of the lead screw 21. The accommodating groove 13 is configured to partially accommodate the brake motor 40.

Specifically, as shown in FIG. 3 to FIG. 6, the speed reducer 30 is in transmission connection between the brake motor 40 and the ball lead screw 20, and the ball lead screw 20 is accommodated in the accommodating cavity 11 of the brake caliper 10. It may be understood that the brake motor 40 and the brake caliper are arranged on a side, on which the output shaft 31 is disposed, of the speed reducer 30, so that axial space occupied by the brake motor 40 can be reduced. In this way, an axial size of the electro-mechanical brake apparatus 100 in this application is reduced. Further, the brake motor 40 is partially accommodated in the accommodating groove 13 of the brake caliper 10, so that the axial space occupied by the brake motor 40 can be further reduced, and the axial size of the electro-mechanical brake apparatus 100 in this application is further reduced.

In an embodiment, the speed reducer 30 includes a parallel shaft gear set 34 (refer to FIG. 31), and the parallel shaft gear set 34 includes an input shaft 341 and another output shaft (a second output shaft 342). The input shaft 341 and the another output shaft are spaced from each other in the axial direction of the lead screw 21. The input shaft 341 is configured to be in transmission connection to a motor shaft 41 (refer to FIG. 31) of the brake motor 40, and the another output shaft is configured to be in transmission connection to another input shaft (the second input shaft 325) of the planetary gear set 32.

Specifically, refer to FIG. 31. FIG. 31 is a diagram of a transmission structure between the speed reducer 30 and the brake motor 40 that are of the electro-mechanical brake apparatus 100. Refer to FIG. 27.

As shown in FIG. 27 and FIG. 31, the parallel shaft gear set 34 includes the input shaft 341, the second output shaft 342, a first parallel gear 343, and a second parallel gear 344. An axis of the input shaft 341, an axis of the second output shaft 342, an axis of the first parallel gear 343, and an axis of the second parallel gear 344 are all parallel to the axis of the lead screw 21.

The input shaft 341 is coaxially fastened to the first parallel gear 343 and is configured to be in transmission connection to the motor shaft 41 of the brake motor 40. The second parallel gear 344 is coaxially fastened to the second output shaft 342 and is configured to be in transmission connection to the second input shaft 325 of the planetary gear set 32. The second parallel gear 344 is in engaged transmission with the first parallel gear 343.

The planetary gear set 32 further includes a first transmission wheel 326 and a second transmission wheel 327. An axis of the first transmission wheel 326 coincides with an axis of the lead screw 21, and the first transmission wheel 326 is in coaxial transmission with the sun gear 323. An axis of the second transmission wheel 327 is parallel to the axis of the lead screw 21, and the second transmission wheel 327 is coaxially fastened to the second input shaft 325. In the diagram of FIG. 27, the second input shaft 325 and the second output shaft 342 are coaxially fastened, and the second transmission wheel 327 is in engaged transmission with the first transmission wheel 326.

In a working process of the electro-mechanical brake apparatus 100 in this application, the brake motor 40 outputs a brake force to the input shaft 341 through the motor shaft 41, and the input shaft 341 drives the first parallel gear 343 to rotate, so that the second parallel gear 344 rotates relative to the housing 33 of the speed reducer 30. The second parallel gear 344 in rotation transfers the brake force to the sun gear 323 through the second output shaft 342, the second input shaft 325, the second transmission wheel 327, and the first transmission wheel 326, and transfers the brake force to the output shaft 31 through each gear in the planetary gear set 32. The output shaft 31 then transfers the brake force to the friction plate 51 through the ball lead screw 20, to implement a braking function of the electro-mechanical brake apparatus 100 in this application.

In this embodiment, a diameter of the second transmission wheel 327 is less than a diameter of the second parallel gear 344, so that there is a large transmission ratio between the second transmission wheel 327 and the sun gear 323 to adjust torque of the brake force transferred to the planetary gear set 32. In this way, a thrust force applied by the speed reducer 30 and the ball lead screw 20 on the friction plate 51 is increased, and braking efficiency of the electro-mechanical brake apparatus 100 in this application is improved.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An electro-mechanical brake apparatus in which a lead screw embeds or is embedded in an output shaft, wherein the electro-mechanical brake apparatus comprises a brake caliper, a ball lead screw, and a speed reducer, the ball lead screw comprises the lead screw and a screw nut, the speed reducer comprises the output shaft, one end of the output shaft is configured to drive the lead screw to rotate, the screw nut is configured to move with rotation of the lead screw in an axial direction of the lead screw, the brake caliper is configured to: fasten the speed reducer and accommodate the lead screw and the screw nut, an end face of the lead screw faces the speed reducer in the axial direction of the lead screw, and the end face comprises:
an axial groove, wherein the one end of the output shaft is configured to be embedded in the axial groove in the axial direction of the lead screw, and the axial groove is configured to be in transmission connection to the one end of the output shaft; or
an axial protrusion, wherein the axial protrusion is configured to be embedded in or nest the one end of the output shaft in the axial direction of the lead screw, and the axial protrusion is configured to be in transmission connection to the one end of the output shaft.

2. The electro-mechanical brake apparatus according to claim 1, wherein a thread of an inner circumferential surface of the screw nut is engaged with a thread of an outer circumferential surface of the lead screw, the brake caliper comprises an accommodating cavity, and the accommodating cavity is configured to accommodate the screw nut, the lead screw, and at least one of a pressure sensor or a thrust bearing, wherein
in the axial direction of the lead screw, at least one of the pressure sensor or the thrust bearing is arranged between the end face and a cavity wall of the accommodating cavity.

3. The electro-mechanical brake apparatus according to claim 2, wherein the end face comprises the axial protrusion, wherein
in the axial direction of the lead screw, a length of the lead screw is greater than a length of the screw nut;
in a radial direction of the lead screw, a diameter of the axial protrusion is less than an inner diameter of the screw nut; and
in a direction that is in the axial direction of the lead screw and that faces the speed reducer, the thrust bearing and the pressure sensor are sequentially sleeved on the axial protrusion.

4. The electro-mechanical brake apparatus according to claim 3, wherein in the radial direction of the lead screw:
the diameter of the axial protrusion is greater than a diameter of the output shaft, and an inner hole of the thrust bearing and an inner hole of the pressure sensor are separately configured to abut against an outer circumferential surface of the axial protrusion; or
a diameter of the output shaft is greater than the diameter of the axial protrusion, and an inner hole of the thrust bearing and an inner hole of the pressure sensor are separately configured to abut against an outer circumferential surface of the output shaft.

5. The electro-mechanical brake apparatus according to claim 2, wherein the end face comprises an axial groove, wherein
in the axial direction of the lead screw, a length of the lead screw is greater than a length of the screw nut;
in a radial direction of the lead screw, a diameter of the axial groove is less than an inner diameter of the screw nut;
in a direction that is in the axial direction of the lead screw and that faces the speed reducer, the thrust bearing and the pressure sensor are sequentially sleeved on the output shaft; and
an inner hole of the thrust bearing and an inner hole of the pressure sensor are separately configured to abut against an outer circumferential surface of the output shaft.

6. The electro-mechanical brake apparatus according to any one of claims 3 to 5, wherein in the axial direction of the lead screw, the accommodating cavity comprises a first segment and a second segment that are connected to each other, an inner circumferential surface of the first segment is configured to abut against an outer circumferential surface of the screw nut, and an inner circumferential surface of the second segment is configured to abut against an outer circumferential surface of the pressure sensor, wherein
in the radial direction of the lead screw, a diameter of the inner circumferential surface of the first segment is less than a diameter of the inner circumferential surface of the second segment and is greater than the inner diameter of the screw nut; and
in the axial direction of the lead screw, a length of the second segment is less than or equal to a sum of a length of the thrust bearing and a length of the pressure sensor.

7. The electro-mechanical brake apparatus according to claim 6, wherein in the axial direction of the lead screw, the accommodating cavity comprises a third segment, and the third segment is connected to the first segment through the second segment, wherein
in the radial direction of the lead screw, a diameter of an inner circumferential surface of the third segment is less than the diameter of the inner circumferential surface of the second segment and is greater than a diameter of the one end of the output shaft; and
in the axial direction of the lead screw, an end face that is of the third segment and that faces the lead screw is configured to abut against an outer surface of the pressure sensor.

8. The electro-mechanical brake apparatus according to any one of claims 3 to 7, wherein in the axial direction of the lead screw, the thrust bearing comprises two opposite side faces, wherein one of the side faces is attached to the end face of the lead screw, and the other of the side faces is attached to another outer surface of the pressure sensor, wherein
an outer diameter of the one side face is less than or equal to an outer diameter of the end face; and
an outer diameter of the other side face is less than or equal to an outer diameter of the another outer surface.

9. The electro-mechanical brake apparatus according to any one of claims 2 to 8, wherein the one end of the output shaft penetrates the cavity wall of the accommodating cavity in the axial direction of the lead screw, and is located in the accommodating cavity, wherein
an outer circumferential surface of the one end of the output shaft comprises at least one radial groove, and the at least one radial groove is configured to be embedded in the axial groove or the axial protrusion; or
an inner circumferential surface of the one end of the output shaft comprises at least one radial protrusion, and the at least one radial protrusion is configured to nest the axial protrusion.

10. The electro-mechanical brake apparatus according to any one of claims 1 to 9, wherein the ball lead screw comprises a piston, and the piston is partially accommodated in the accommodating cavity, wherein
in the direction that is in the axial direction of the lead screw and that faces the speed reducer, the piston and the screw nut are sequentially arranged;
the piston comprises a groove, wherein a groove opening of the groove faces the speed reducer in the axial direction of the lead screw, and the groove is configured to partially accommodate the lead screw; and
in the axial direction of the lead screw, a sum of a groove depth of the groove and the length of the screw nut is greater than or equal to the length of the lead screw.

11. The electro-mechanical brake apparatus according to any one of claims 1 to 10, wherein the speed reducer comprises a planetary gear set, the other end of the output shaft comprises at least one shaft hole, the at least one shaft hole is configured to fasten at least one transmission shaft, and the at least one transmission shaft is configured to be in transmission connection to at least one planetary gear of the one planetary gear set, wherein
in the axial direction of the lead screw, the planetary gear set is arranged on a side that is of the output shaft and that is away from the lead screw; and
in the radial direction of the lead screw, a diameter of the other end of the output shaft is greater than the diameter of the one end, and an axis of each of the at least one shaft hole is offset from an axis of the lead screw.

12. The electro-mechanical brake apparatus according to claim 11, wherein the planetary gear set comprises a sun gear, and the sun gear is configured to be in transmission connection to the at least one planetary gear, wherein
in the axial direction of the lead screw, the sun gear is disposed on the side that is of the output shaft and that is away from the lead screw;
the other end of the output shaft comprises a bearing accommodating groove, and a groove opening of the bearing accommodating groove is away from the lead screw in the axial direction of the lead screw; and
the bearing accommodating groove is configured to fasten an outer ring of a bearing, and an inner ring of the bearing is configured to fasten a transmission shaft of the sun gear.

13. The electro-mechanical brake apparatus according to any one of claims 1 to 12, wherein in the axial direction of the lead screw, the brake caliper and a housing of the speed reducer comprise two side walls that are fixedly attached, each of the side walls comprises one avoidance hole, and the two avoidance holes are both configured to allow the output shaft to pass through, wherein
in the radial direction of the lead screw, a diameter of one avoidance hole is greater than a diameter of the other avoidance hole; and
an inner circumferential surface of the one avoidance hole is configured to fasten an outer ring of another bearing, and an inner ring of the another bearing is configured to fasten a middle segment of the output shaft.

14. The electro-mechanical brake apparatus according to any one of claims 1 to 13, wherein the electro-mechanical brake apparatus comprises a brake motor, and the speed reducer is configured to be in transmission connection to the brake motor and the ball lead screw, wherein
in the radial direction of the lead screw, the brake motor and the brake caliper are arranged on a same side of the speed reducer; and
the brake caliper comprises an accommodating groove, the accommodating groove is spaced away from the ball lead screw in the radial direction of the lead screw, and the accommodating groove is configured to partially accommodate the brake motor.

15. A vehicle, comprising a wheel and the electro-mechanical brake apparatus according to any one of claims 1 to 14, wherein
the axis of the lead screw of the electro-mechanical brake apparatus is parallel to an axis of the wheel;
in an axial direction of the wheel, the brake caliper of the electro-mechanical brake apparatus is closer to the wheel than the speed reducer; and
the screw nut of the electro-mechanical brake apparatus is configured to drive one or more friction plates to slide in the axial direction of the wheel, to brake a brake disc of the wheel.
